# EUROPEAN PATENT APPLICATION

(11) **EP 2 134 013 A1**
(43) Date of publication of application: **16.12.2009**
(21) Application number: 08720544.9
(22) Date of filing: 19.03.2008
(51) Int. Cl.: H04H 20/28, H04H 20/95, H04N 7/173

(54) **DIGITAL BROADCAST TRANSMITTING APPARATUS, DIGITAL BROADCAST RECEIVING APPARATUS, AND DIGITAL BROADCAST TRANSMITTING/RECEIVING SYSTEM**

(30) Priority: 26.03.2007 JP 2007078496
(71) Applicant: Panasonic Corporation, Kadoma-shi Osaka 571-8501 (JP)
(72) Inventor: GOZEN, Shinya, Osaka-shi, Osaka 540-6207 (JP); TAKAGI, Yoshiaki, Osaka-shi, Osaka 540-6207 (JP); IWAKUNI Kaoru, Osaka-shi, Osaka 540-6207 (JP); KATAYAMA, Takashi, Osaka-shi, Osaka 540-6207 (JP)
(74) Representative: Kügele, Bernhard
(86) International application number: PCT/JP2008/000659
(87) International publication number: WO 2008/117524

(57) **Abstract**

For MPEG-2 AAC, MPEG-Surround or (AAC+SBR), whether a received bitstream is of AAC or MPS can not be determined till the details of the received bitstream is analyzed up to the end. Therefore, if the output delay of an audio signal is large, the output of a video signal cannot appropriately be delayed under control, not allowing A/V synchronization.

A transmitting apparatus includes: a data packet generating unit which generates a data packet including encoding information that is not included in the header information of an audio stream packet and that indicates whether any processing is included which causes the decoding time of the encoded audio signal to exceed a predetermined decoding time, the data packet being analyzed by a receiving apparatus before decoding the audio stream packet is started; and a transmitting unit which transmits the audio stream packet, data packet and video stream packet via multiplex broadcast. The receiving apparatus can know the information specific to the encoding scheme without analyzing the details of the encoded signal up to the end.

## Description

### Technical Field

The present invention relates to a digital broadcast transmitting system for transmitting information, such as audio, video and text, in digital format over a transmission channel including ground waves and satellite waves, and to a digital broadcast transmitting apparatus which is used for transmission and a digital broadcast receiving apparatus.

### Background Art

In recent years, digital broadcast which transmits information, such as audio, video, and text, as digital signals over a transmission channel including ground waves and satellite waves, is becoming common.

The scheme proposed in ISO/IEC 13818-1 is well known as a scheme for transmitting digital signals. In ISO/IEC 13818-1, schemes relating to control are specified in which the transmitting apparatus side multiplexes and transmits audio, video, and other data separately encoded for respective programs, and the receiving apparatus side receives and reproduces a designated program.

Examples of well known schemes of encoding audio signals include ISO/IEC 13818-7 (MPEG-2 Audio AAC) and its derived scheme AAC+SBR. Examples of well known schemes of encoding video signals include ISO/IEC 13818-2 (MPEG-2 Video) and ISO/IEC 14496-10 (MPEG-4 AVC/H.264).

Each encoded audio signal and video signal is divided at an arbitrary position, and header information including reproduction time information is added, so that a packet referred to as packetized elementary stream (PES) is constructed. Further, the PES is basically divided into 184 bytes, header information including an ID for identification referred to as a packet identifier (PID) is added, and the PES is reconstructed into a packet referred to as a transport packet (TSP). Subsequently, the TSP is multiplexed together with data packet such as text. At this time, table information referred to as program specific information (PSI) indicating relationship between programs and packets making up the programs, is also multiplexed together.

In the PSI, four kinds of tables, such as a program association table (PAT) and a program map table (PMT), are specified. In the PAT, PIDs of PMTs corresponding to respective programs are described. In the PMT, PIDs of the packets storing audio and video signals making up corresponding programs, are described. The receiving apparatus can extract only packets making up a desired program from among the TSPs in which plural programs are multiplexed, by referring to the PAT and PMT. Note that data packets and PSIs are stored in TSPs in a format called a section, but not as a PES.

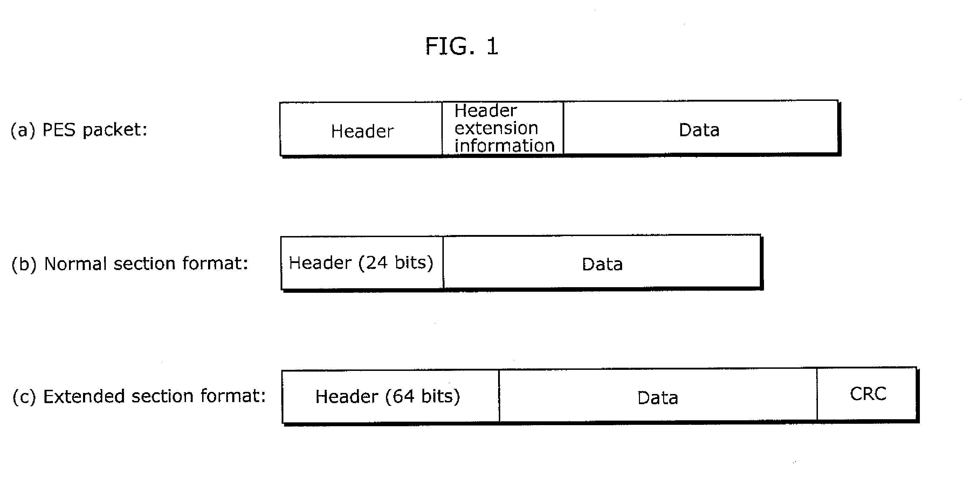

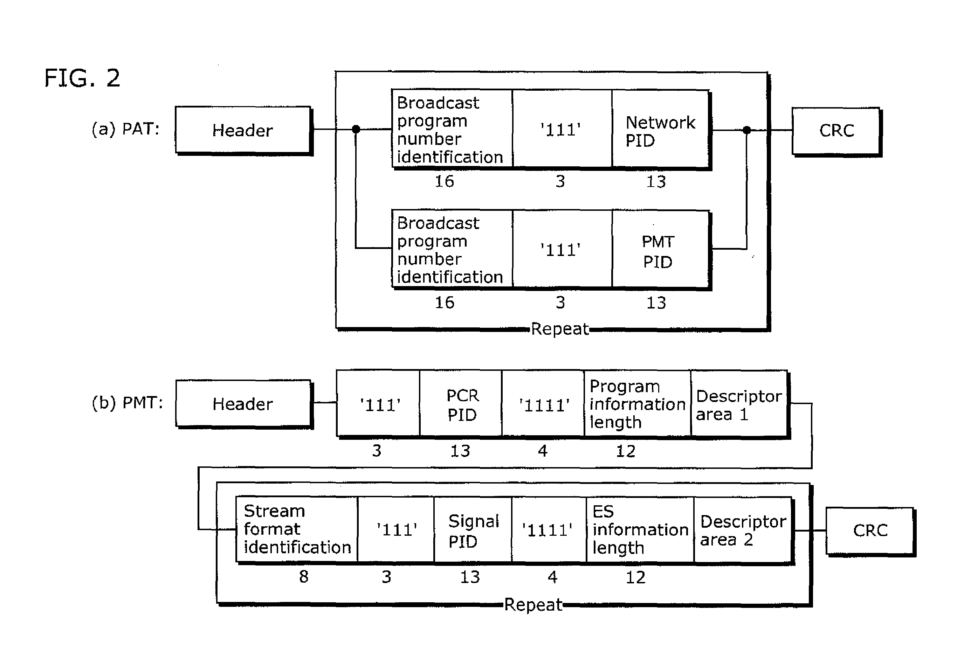

FIG. 1 is a diagram showing format structures of a PES packet and section formats. FIG. 1 (a) shows the format structure of a PES packet. The PES packet includes a header, a header extension information, and data. The header can include reproduction time information which can be used for synchronous reproduction of video and audio. The data includes substantial data such as video data and audio data. FIG. 1 (b) shows the structure of a normal section format of the PES packet. In the normal section format, the PES packet includes a 24-bit header and data. Further, FIG. 1 (c) shows the structure of an extended section format of the PES packet. In the extended section format, the PES packet includes a 64-bit header, data, and a cyclic redundancy checksum (CRC), and is structured not to be easily influenced by transmission error and the like. The PAT and PMT are packetized in the extended section format shown in FIG. 1 (c). On the other hand, in the Association of Radio Industries and Broadcast (ARIB) STD-B10 "Service Information for Digital Broadcasting System" standard (Non-Patent Reference 1), in addition to the four kinds of table information of the PSI, table information for a user identifying services and events is further specified separately, and is distinguished as service information (SI). Furthermore, more flexible table structures are possible by embedding various kinds of descriptors in the PSI and SI. FIG. 2 is a diagram showing the detailed format structures of the PAT and PMT. FIG. 2 (a) shows the format structure of the PAT. As shown in FIG. 2(a), the PAT includes a header, a repetitive part, and a CRC. In the repetitive part, a 16-bit broadcast program number identification field, a 3-bit "111" and a 13-bit network PID, or a 16-bit broadcast program number identification field, a 3-bit "111", and a 13-bit PMT PID, are described. In digital broadcast, PAT associates broadcast program number identification field with the PID of PMT. FIG. 2 (b) shows the format structure of the PMT. In the PMT, following a header, a 3-bit "111", a 13-bit PCR PID, a 4-bit "1111", a 12-bit program information length, and a descriptor area 1, are described. Subsequently, the repetitive part is repeated as many times as the number of elementary streams, and CRC is described at the end. In the repetitive part, a 8-bit stream format identification field, a 3-bit "111", a 13-bit signal PID, a 4-bit "1111", a 12-bit ES information length, and a descriptor area 2, are described. Further, at the end of the PMT, CRC is described. With this, in the case where one broadcast program is selected, the PMT corresponding to the selected broadcast program is specified based on the PMT PID of the PAT, and packets, in which encoded signals of substantial data such as video and audio making up the selected broadcast program are described, can be specified based on the signal PIDs described in the PMT.

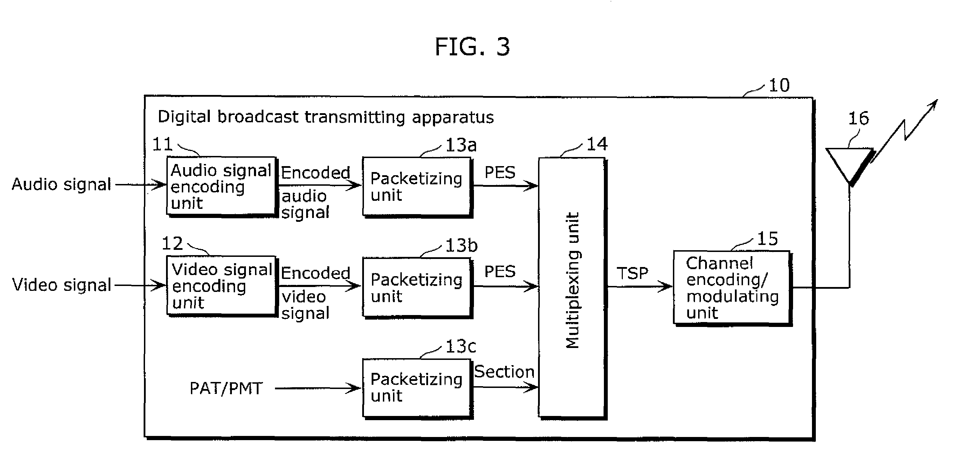

FIG. 3 is a diagram showing the structure of a conventional digital broadcast transmitting apparatus. A conventional digital broadcast transmitting apparatus 10 includes an audio signal encoding unit 11, a video signal encoding unit 12, packetizing units 13a, 13b, and 13c, a multiplexing unit 14, a channel encoding/modulating unit 15, and an antenna 16. Each of audio and video signals making up programs is respectively inputted into the audio signal encoding unit 11 and the video signal encoding unit 12, and converted into digital signals by being encoded. The packetizing units 13a and 13b add header information to the respective converted digital signals, and packetize them into PES packets. At the same time, data signals, PAT and PMT are also inputted into the packetizing unit 13c, and packetized in a section format. Subsequently, the multiplexing unit 14 time-multiplexes all PES and section packets, and the channel encoding/modulating unit 15 performs transmitting processing. Then, the PES and section packets are transmitted through the antenna 16. Here, note that the transmitting processing refers to channel encoding processing, such as block error correction encoding, convolutional encoding, and interleave, and digital modulating processing such as orthogonal frequency division multiplexing (OFDM). Detailed descriptions of such processing are omitted. The details of the transmitting processing in integrated services digital broadcasting-terrestrial (ISDB-T) system are described, for example, in ARIB STD-B24 "Data Coding and Transmission Specification for Digital Broadcasting" standard (Non-Patent Reference 2).

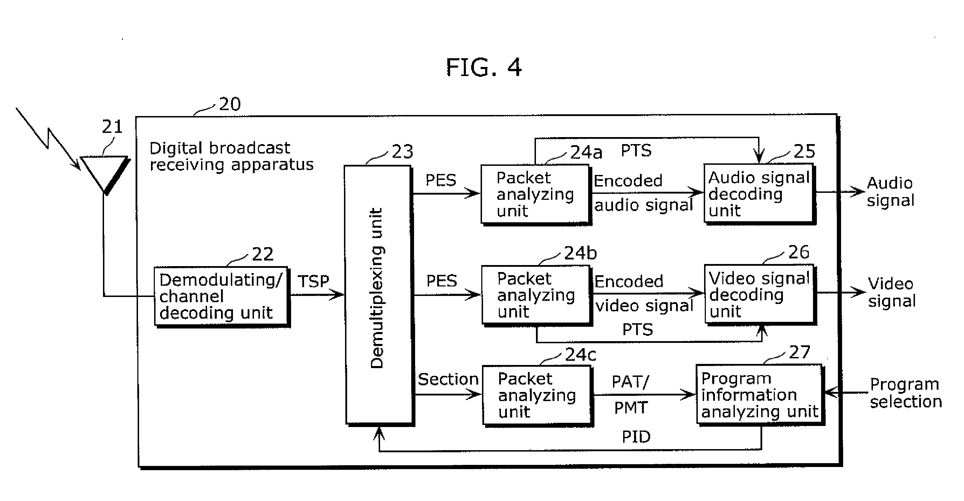

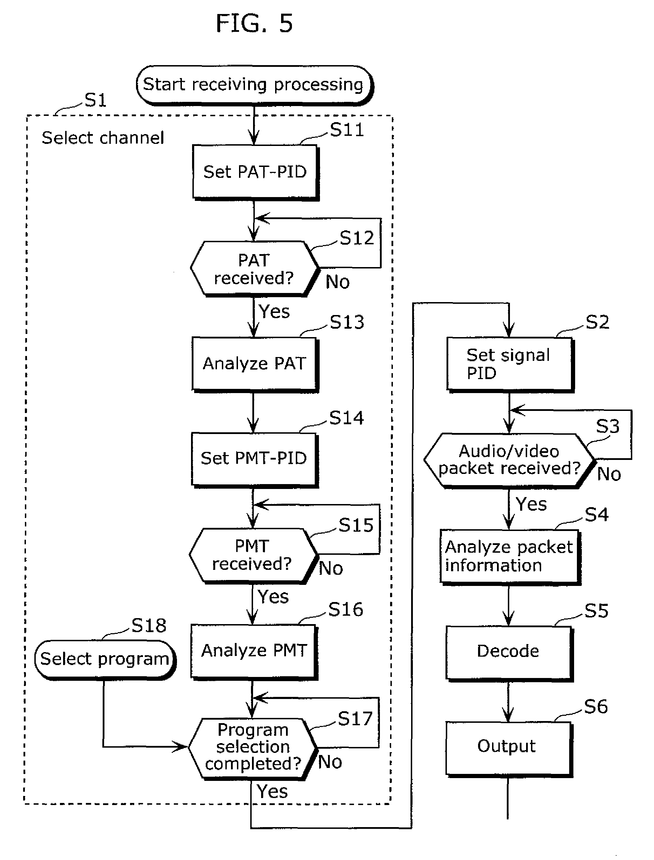

FIG. 4 is a diagram showing the structure of a conventional digital broadcast receiving apparatus. FIG. 5 is a flowchart showing the flow of the receiving processing performed in the conventional digital broadcast receiving apparatus. A conventional digital broadcast receiving apparatus 20 includes an antenna 21, a demodulating/channel decoding unit 22, a demultiplexing unit 23, packet analyzing units 24a, 24b, and 24c, an audio signal decoding unit 25, a video signal decoding unit 26, and a program information analyzing unit 27. The demodulating/channel decoding unit 22 performs receiving processing on the digital broadcast wave received by the digital broadcast receiving apparatus via the antenna 21, and outputs a multiplexed TSP sequence. Here, note that the receiving processing refers to demodulating processing of digital modulation signals such as OFDM, and a channel decoding processing such as error correction decoding and de-interleave. The receiving processing refers to a paired process of the transmitting processing in the channel encoding/modulating unit 15.

The demultiplexing unit 23 first selects a PAT packet from the received TSP sequence (S11, and S12 in FIG. 5). Then the packet analyzing unit 24c analyzes the PAT (S13). The program information analyzing unit 27 extracts, from the PAT, the PIDs of the PMT packets corresponding to respective programs in service, and notifies the demultiplexing unit 23 of the extracted PIDs. Subsequently, the program information analyzing unit 27 selects the PMT packets indicated by the extracted PIDs (S14 and S15), analyzes the selected PMT packets (S16), and presents, to the user, detailed information of respective programs in service so as to receive a program selection of the user (S18 and S17). The program information analyzing unit 27 notifies the demultiplexing unit 23 of the PIDs of the packets storing audio and video signals making up the desired program, based on the program selection of the user (S2). With this, audio and video packets of the PESs making up the desired program are selected (S3).

The packet analyzing units 24a and 24b divide each of audio and video packets into header information field and payload field (here, referred to as an encoded signal) and extracts the respective divided fields (S4). Then, the audio signal decoding unit 25 and the video signal decoding unit 26 respectively decodes the encoded audio and video signals. The audio and video signals obtained through decoding, are outputted according to presentation time stamp (PTS) included in the header information extracted by the packet analyzing units 24a and 24b.

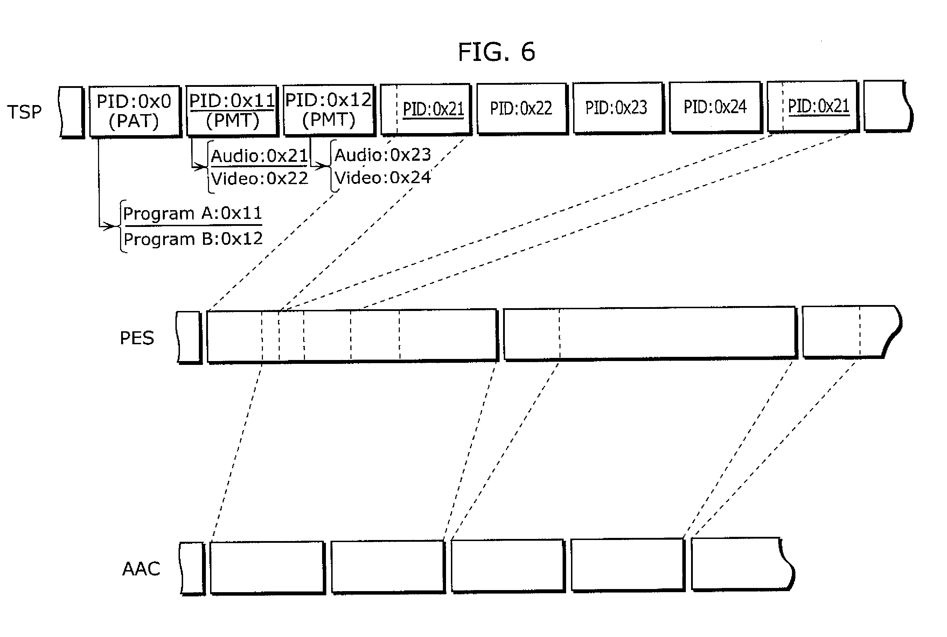

FIG. 6 is a diagram showing a model in which one line AAC bitstream is formed from a multiplexed TSP sequence in a conventional digital broadcast receiving apparatus. As shown in FIG. 6, in the PAT indicated by PID: "0x0", PIDs of the PMTs of program A and program B are described. For example, it is described that the PID of the PMT of the program A is "0x11", and the PID of the PMT of the program B is "0x12". In each PMT, the PIDs of signal packets, in which encoded audio and video data making up programs which are associated in the PAT, are described. For example, in the PMT of the program A (PID: "0x11"), it is described that the PID of the audio signal packet is "0x21", and the PID of the video signal packet is "0x22". Further, in the PMT of the program B (PID: "0x12"), it is described that the PID of the audio signal packet is "0x23", and the PID of the video signal packet is "0x24".

Here, for example, in the case where the user selects the program A, it is possible to obtain PESs made up of encoded audio data making up the program A by extracting, from among the TSPs, only packets which have "0x21" as PID. Further, it is possible to obtain PESs made up of encoded video data making up the program A by extracting, from among TSPs, only packets which have "0x22" as PID.

By extracting only data excluding header and the like from thus obtained PES packets, it is possible to obtain MPEG-2 AAC stream, for example (See Patent Reference 1).

In recent years, in order for further improvement of compression efficiency of audio signals, there is a proposed scheme in which a conventional AAC is extended. The proposed scheme allows reconstruction of high frequency components and reproduction of multi-channel sound by adding a small amount of additional information to a basic signal that is a bitstream in which rate is reduced by narrow banding or by converting into monaural or stereo with down-mixing. For example, there are proposed schemes such as AAC+SBR in which even a signal, narrow-banded into approximately 10 kHz as a basic signal, can be reproduced with sound quality equivalent to CD even at approximately 48 kbps by adding high frequency information, and MPEG-Surround in which reproduction of 5.1-channel surround is possible even at approximately 96 kbps by adding inter-channel level difference and phase difference information.

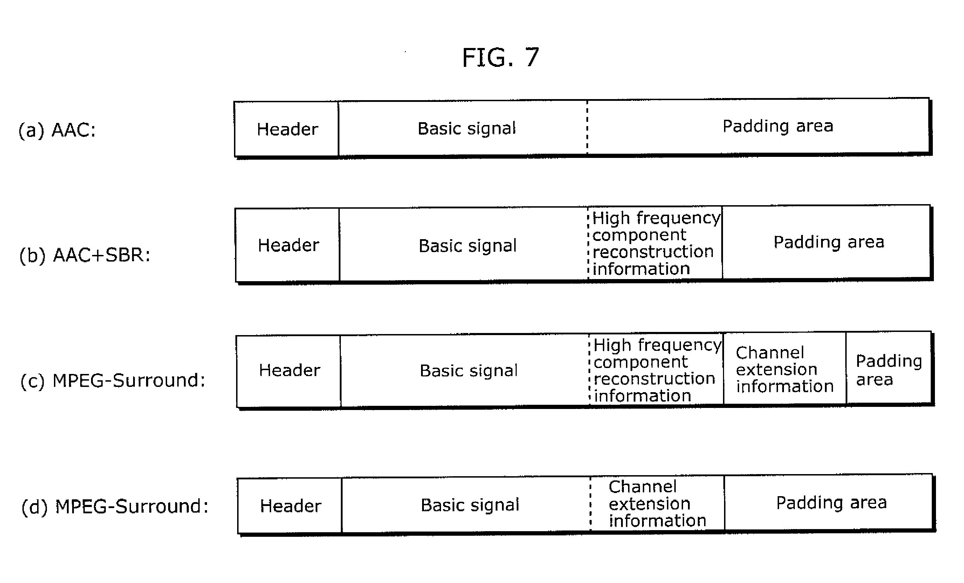

FIG. 7 is a diagram showing respective format structures of AAC, AAC+SBR and MPEG-Surround. FIG. 7(a) shows the frame structure of normal MPEG-2 AAC. FIG. 7(b) shows the frame structure in which high frequency information represented by SBR scheme is added to the basic signal represented by MPEG-2 AAC. FIG. 7(c) shows the frame structure of MPEG-Surround in which high frequency information represented by SBR scheme and channel extension information are added to the basic signal represented by MPEG-2 AAC. FIG. 7(d) shows the frame structure of the MPEG-Surround in which channel extension information is added to the basic signal represented by MPEG-2 AAC. As shown in FIGs. 7(a) to (d), the format structures of header and basic signal field are common in all schemes. In the conventional MPEG-2 AAC frame structure, as shown in FIG. 7(a), there is a padding area which is filled with "0" or the like following the basic signal; and thus, a conventional player which supports MPEG-2 AAC can reproduce the basic signal field no matter which data of FIG. 7 (a) to (d) is inputted.

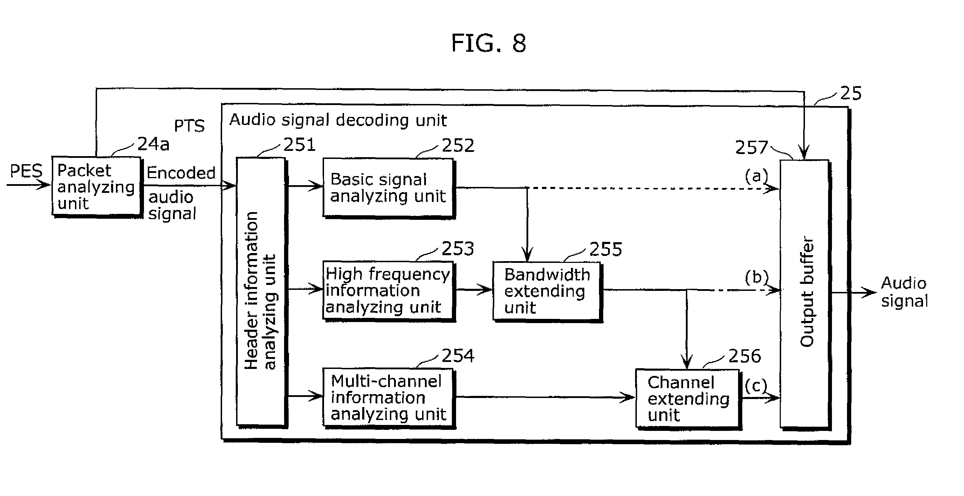

FIG. 8 is a diagram showing the structure of an audio signal decoding unit which can decode MPEG-Surround. The audio signal decoding unit 25 is connected to the subsequent stage of the packet analyzing unit 24a, and includes a header information analyzing unit 251, a basic signal analyzing unit 252, a high frequency information analyzing unit 253, a multi-channel information analyzing unit 254, a bandwidth extending unit 255, a channel extending unit 256, and an output buffer 257. The header information analyzing unit 251 analyzes the stream structure of the encoded audio signal (MPEG-Surround bitstream of FIG.7(c)) extracted by the packet analyzing unit 24a, and extracts the basic signal, high frequency component reconstruction information and the channel extension information in the aforementioned order starting from the top of the frame. The basic signal, the high frequency component reconstruction information, and the channel extension information that are extracted by the header information analyzing unit 251 are respectively inputted into the basic signal analyzing unit 252, the high frequency component information analyzing unit 253, and the channel extending unit 256. The basic signal analyzing unit 252 decodes the basic signal extracted by the header information analyzing unit 251 for outputting a narrowband signal. The bandwidth extending unit 255 reconstructs a wideband down-mixed signal using the narrowband signal outputted by the basic signal analyzing unit 252 and the high frequency component reconstruction information outputted by the high frequency information analyzing unit 253. The channel extending unit 256 reconstructs a multi-channel audio signal using the down-mixed signal and the channel extension information outputted by the multi-channel information analyzing unit 254. The audio signal is accumulated in the output buffer 257, and outputted according to PTS.

Here, supplemental explanation is given of operation of the case where the MPEG-Surround bitstream shown in FIG. 7(c) is inputted into the audio signal decoding unit which supports only the conventional AAC. In this case, the AAC version of audio signal decoding unit does not include any of the high frequency information analyzing unit 253, the multi-channel information analyzing unit 254, the bandwidth extending unit 255 and the channel extending unit 256. The high frequency component reconstruction information field and the channel extension information field included in the bitstream are skipped being considered as padding areas, and the narrowband signal indicated by (a) in FIG. 8 is outputted. In the same manner, in the case where the audio signal decoding unit supports AAC and AAC+SBR only, the down-mixed signal indicated by (b) in FIG. 8 is outputted. This is because, as explained above, the header and the basic signal of AAC+SBR and MPEG-Surround have the exact same format structure as AAC. The high frequency component reconstruction information and channel extension information are stored in the area which corresponds to the padding area in the AAC format structure; and thus, even when the audio signal decoding unit does not support MPEG-Surround, a decoding error does not occur, and only compatible parts are decoded and outputted. Due to this format structure, even if stream format is changed in future, compatible format is implemented ensuring minimal reproduction in the conventional apparatus.

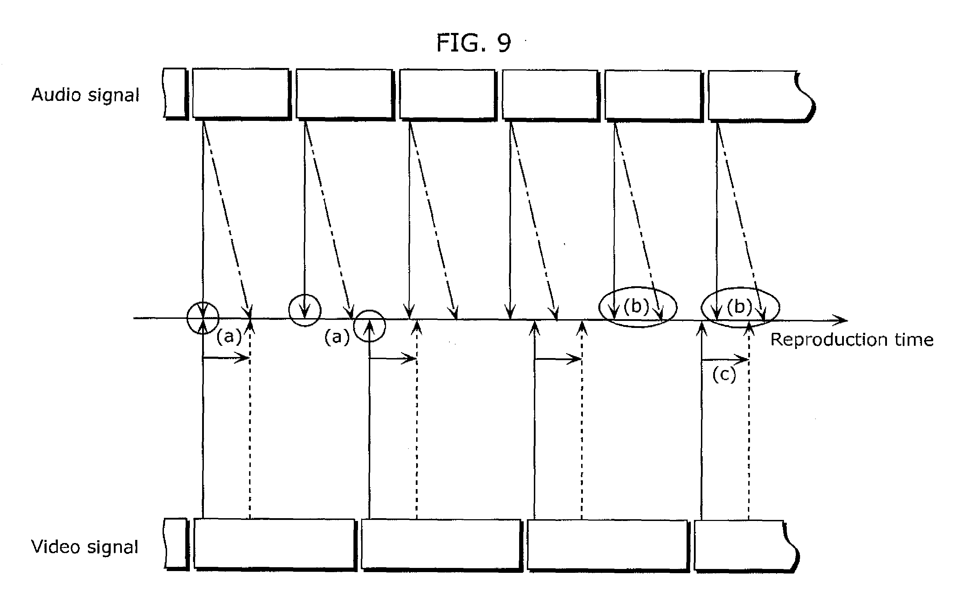

FIG. 9 is a diagram showing an implementation model of AV synchronization. The top part in FIG. 9 shows each frame of the audio signal, and the bottom part shows each frame of the video signal. Normally, AV synchronization is performed in output of respective audio and video signals with reference to PTS added to the PES of audio and PES of video, and the reproduction time of the audio signal and video signal are independently synchronized with the timer of the reproduction apparatus (arrows indicated by solid lines and reproduction time circled by (a)).

However, although there is format compatibility between MPEG-2 AAC and MPEG-Surround, details of decoding processing are different; and thus, time required for processing, that is, processing delay amount is different. More specifically, since channel extension processing, which is not required for decoding in AAC, includes filtering on a frame basis, a larger delay (for example, delay indicated by (b) in FIG. 9) occurs. Thus, although it is possible to start reproduction of each frame at the timing of arrows indicated by solid lines in MPEG-2 AAC, it is only possible to start reproduction of each frame at the timing of arrows indicated by dashed lines in MPEG-Surround. On the other hand, in order to maintain compatibility with conventional apparatuses, that is, receiving apparatuses which do not support MPEG-Surround, delay amount for AAC only is considered and added to PTS itself. In the first place, in the digital broadcast transmitting apparatus 10 (FIG. 3), the encoded audio signal outputted from the audio signal encoding unit 11, cannot be distinguished between AAC and MPEG-Surround from the format structure, and thus, the packetizing unit 13a can add PTS only as input being AAC.

Therefore, in a digital broadcast receiving apparatus which can reproduce MPEG-Surround, unexpected additional delay occurs in reproduction of each frame, causing time lag indicated by (b) in FIG. 9 between reproduction time of the video signal and that of the audio signal. As a result, such a problem occurs that synchronization between the video signal and the audio signal cannot be performed.

For the above problem, there is a possible method in which the audio and video signals are synchronized by delaying start of reproduction of the video signal in the digital receiving apparatus by an amount of time indicated by (c) in FIG. 9, based on information from the digital broadcast transmitting apparatus.

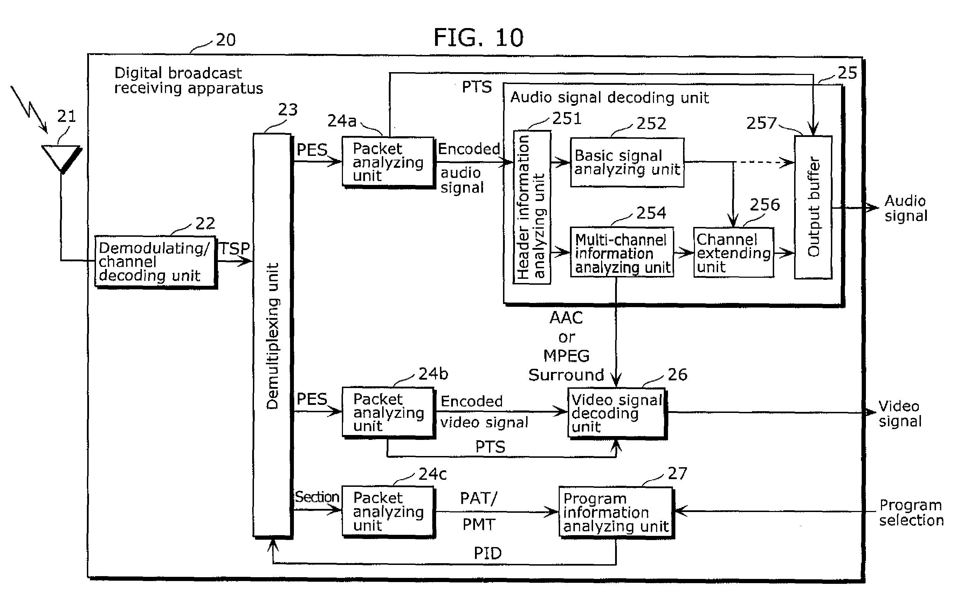

FIG. 10 is a diagram showing the structure of a digital broadcast receiving apparatus including an audio signal decoding unit with a synchronization adjusting function which can decode MPEG-Surround. Note that functional structures of the digital broadcast receiving apparatus in FIG. 10 are the same as those in FIG. 4 except the audio signal decoding unit 25. The audio signal decoding unit 25 has the same function as the audio signal decoding unit 25 in FIG. 8; however, blocks related to AAC+SBR (that is, the high frequency information analyzing unit and bandwidth extending unit) are omitted for simplification. In the digital broadcast transmitting apparatus shown in FIG. 10, AV synchronization is accomplished by the multi-channel information analyzing unit 254 detecting presence of channel extension information to determine whether the encoding scheme of the audio signal is AAC or MPEG-Surround, and informing the video signal decoding unit 26 of the determination result to control output timing of the video signal.
Patent Reference 1: Japanese Patent No. 3466861

### Disclosure of Invention

### Problems that Invention is to Solve

However, channel extension information analyzed by the multi-channel information analyzing unit 254, is described at the end of the bitstream as shown in FIG. 7(c); and thus, determination of whether or not encoding scheme of the audio signal is conventional AAC or MPEG-Surround can only made by analyzing the bitstream up to the end. Therefore, timing correction for outputting the video signal needs to be performed after the processing of the audio signal decoding unit 25, which causes a problem that it takes too long before starting the correction.

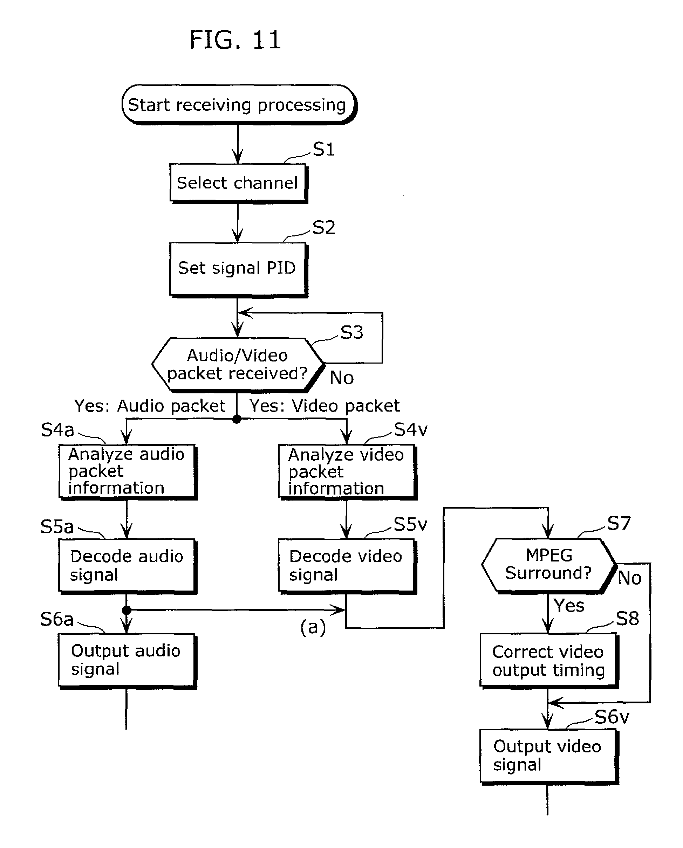

FIG. 11 is a flowchart showing the flow of the receiving processing performed in a digital broadcast receiving apparatus including an audio signal decoding unit which can decode MPEG-Surround. In FIG. 11, processing from S1 through S3 are the same as those in FIG. 5. Note that after reception of the audio and video packets in Step S3, it is further determined whether each of the received packets is a video signal packet or an audio signal packet. Then, respective processing of analyzing packet information S4, decoding S5, and outputting S6 in FIG. 5 are divided into the case of the audio signal and the case of the video signal. Thus, the step numbers are indicated, for example, as S4a for the audio signal, and as S4v for the video signal. The demultiplexing unit 23 receives a packet of the signal PID set in Step S2, and then determines whether the received packet is an audio packet or video packet. When the received packet is an audio packet, the packet analyzing unit 24a analyzes the received packet, and outputs the encoded audio signal included in the packet to the audio signal decoding unit 25, and outputs the PTS of the encoded audio signal to the output buffer 257 (S4a). The audio signal decoding unit 25 decodes the encoded audio signal inputted by the packet analyzing unit 24a (S5a). The multi-channel information analyzing unit 254 included in the audio signal decoding unit 25 analyzes the channel extension information of the decoded audio stream, and outputs, to the video signal decoding unit 26, a signal indicating whether the encoded audio signal has been encoded in MPEG-2 AAC or in MPETG-Surround (a). The audio signals on which channel extension is performed by the channel extending unit 256, and stored in the output buffer 257, are sequentially outputted on a first-in last-out basis (S6a).

When the received packet in Step S3 is a video packet, the packet analyzing unit 24b analyzes the received packet, and outputs, to the video signal decoding unit 26, the encoded video signal included in the packet and the PTS of the encoded video signal (S4v). The video signal decoding unit 26 decodes the encoded video signal inputted by the packet analyzing unit 24b (S5a). After decoding the encoded video signal, the video signal decoding unit 26 determines whether or not the signal inputted by the multi-channel information analyzing unit 254 indicates MPEG-Surround (S7). As a result of the determination, when the audio signal is MPEG-Surround, the video signal decoding unit 26 corrects output timing of the video signal by the corresponding amount of time. As a result of the determination in Step S7, when the audio signal is not MPEG-Surround, the video signal decoding unit 26 outputs the video signal at the timing indicated by PTS (S6v).

Note that the determination of MPEG-Surround in the video signal processing (S7) may be performed before analysis of video packet information (S4v) or decoding of video signal (S5v), but, at least, it needs to be performed after decoding of the audio signal (S5a). Furthermore, in the case where decoding of the audio signal (S5a) cannot be performed by the time designated by PTS added to the video packet, output of the video signal (S6v) starts first, which causes a problem that AV synchronization cannot be made, or correction is made in the middle of program reproduction, resulting in interruption of the video signal output.

The present invention has been conceived to solve the above conventional problems, and has an object to provide a digital broadcast transmitting apparatus, a digital broadcast receiving apparatus, and a digital broadcast transmitting/receiving system, in which determination of processing depending on the encoding scheme of the transmitted audio signal can be promptly made by the digital broadcast receiving apparatus.

### Means to Solve the Problems

In order to solve the problems, the digital broadcast transmitting apparatus according to the present invention is a digital broadcast transmitting apparatus which provides multiplex broadcast by encoding and packetizing an audio signal and a video signal that are reproduced in synchronization. The digital broadcast transmitting apparatus includes: an audio stream packet generating unit which converts the audio signal into an encoded audio signal by encoding the audio signal and to generate an audio stream packet including the encoded audio signal; a data packet generating unit which generates a data packet which is analyzed by a digital broadcast receiving apparatus before decoding the audio stream packet is started, the data packet including encoding information which is not included in header information of the audio stream packet, and which indicates whether or not decoding of the encoded audio signal includes a processing which causes decoding time of the encoded audio signal to exceed a predetermined decoding time; a video stream packet generating unit which converts the video signal into an encoded video signal by encoding the video signal, and to generate a video stream packet including the encoded video signal; and a transmitting unit which multiplexes the audio stream packet, the data packet, and the video stream packet so as to generate multiplexed data, and transmit the generated multiplexed data via a broadcast wave.

As described above, according to the digital broadcast transmitting apparatus of the present invention, data packet includes encoding information which is not included in header information of the audio stream packet, and which indicates whether or not decoding of the encoded audio signal includes a processing which causes decoding time of the encoded audio signal to exceed a predetermined decoding time. The data packet is analyzed by the digital broadcast receiving apparatus before decoding of the audio stream packet is started. Therefore, it is possible for the digital broadcast receiving apparatus to know, before starting decoding of the audio stream packet, whether or not decoding of the encoded audio signal includes any processing which exceeds a predetermined decoding time. As a result, processing for adjusting synchronization of audio signal with video signal can be performed well in advance.

Note that it may be that the audio stream packet generating unit includes an audio encoding unit which converts the audio signal into the encoded audio signal using one of a first encoding mode and a second encoding mode, the first encoding mode being a mode in which the audio signal is encoded in accordance with MPEG-2 AAC scheme, the second encoding mode being a mode in which the audio signal is encoded in accordance with the MPEG-2 AAC scheme, and is also encoded including auxiliary information for extending a high frequency component or an output channel count of a basic signal obtained in the first encoding mode. Also it may be that the data packet generating unit includes an encoding information generating unit which generates the encoding information indicating which one of the first encoding mode and the second encoding mode has been used by the audio encoding unit in the conversion of the audio signal into the encoded audio signal. According to the present invention, since the encoding information describes whether the audio signal has been encoded simply in accordance with MPEG-2 AAC, or high frequency components or output channel count of the basic signal has been extended in addition to encoding in accordance with MPEG-2 AAC. Therefore, it is possible for the digital broadcast receiving apparatus to perform processing for adjusting synchronization of audio signal with video signal before starting decoding the audio stream packet.

Furthermore, it may be that the data packet generating unit generates an independent data packet including only the encoding information as data. With this, it is possible for the digital broadcast receiving apparatus to analyze the encoding information data packet, and the audio and video stream packets at the same time.

Furthermore, it may be that the data packet generating unit generates the data packet for each audio stream packet generated by the audio stream packet generating unit, and when data packet includes information that is identical to information included in an immediately preceding data packet, the transmitting unit transmits multiplexed data in which the data packet is not multiplexed. Since it is not likely that the encoding information changes continuously within a single program, it is not necessary to multiplex an encoding information packet for each audio packet. As a result, it is possible to improve transmission efficiency of multiplexed data.

Further, it may be that the data packet generating unit generates the data packet in a format defined as a section format.

Further, it may be that the data packet generating unit (i) represents, using a descriptor, the encoding information indicating which one of the first encoding mode and the second encoding mode has been used by the audio encoding unit in the conversion of the audio signal into the encoded audio signal; and (ii) generates a packet in which the descriptor is embedded into a descriptor area, the descriptor area being repeated for each of elementary streams within a program map table (PMT). In the PMT packet, PID, indicating elementary stream packets which stores audio signal making up a program, is described. Thus, by embedding a descriptor representing encoding information into a descriptor area which is associated with each PID, it is possible to efficiently transmit encoding information.

Furthermore, it may be that the data packet generating unit further generates a data packet including encoding information indicating an extended channel count of the basic signal, the extended channel count of the basic signal being an output channel count of the basic signal of the case where the output channel count of the basic signal is extended using the auxiliary information. As described, by transmitting in data packet including the encoding information, the channel count of the case where the output channel count is extended using auxiliary information, it is possible to select a channel extension processing optimal to reproduction environment with sufficient promptness.

Further, it may be that the data packet generating unit further generates a data packet including encoding information indicating data length of the basic signal. With this, it is possible to determine whether there is an error in the basic signal; and thus reproducing only the basic signal is possible when there is no error in the basic signal. It is also possible to extend the channel count of the basic signal directly into the channel count of the multi-channel signal, and to reproduce the multi-channel signal.

Further, a digital broadcast receiving apparatus according to the present invention is a digital broadcast receiving apparatus which receives multiplex broadcast in which an audio signal and a video signal are encoded, packetized, and transmitted, the audio signal and the video signal being reproduced in synchronization. The digital broadcast receiving apparatus includes a receiving unit which receives the multiplex broadcast; a separating unit which separates, from multiplexed data, an audio stream packet, a video stream packet, and a data packet, the multiplexed data being received by the receiving unit via the multiplex broadcast, the audio stream packet including an encoded audio signal which is an audio signal that has been encoded, the video stream packet including an encoded video signal which is a video signal that has been encoded, the data packet being other than the audio stream packet and the video stream packet; an analyzing unit which analyzes encoding information from the separated data packet before decoding the audio stream packet is started, the encoding information being information which is not included in header information of the audio stream packet, and which indicates whether or not decoding of the encoded audio signal includes a processing which causes decoding time of the encoded audio signal to exceed a predetermined decoding time; and a decoding unit which adjusts output timings of the audio signal and the video signal by an amount of time that the decoding time of the audio signal exceeds the predetermined decoding time, when the encoding information indicates the decoding of the encoded audio signal includes the processing which causes the decoding time of the encoded audio signal to exceed the predetermined decoding time.

As described, according to the digital broadcast receiving apparatus according to the present invention, it is possible to analyze, before starting decoding of the audio stream packet, data packet which includes encoding information which is not included in header information of the audio stream packet, and which indicates whether or not decoding of the encoded audio signal includes a processing which causes decoding time of the encoded audio signal to exceed a predetermined decoding time. With this, it is possible for the digital broadcast receiving apparatus to know, before starting decoding of the audio stream packet, whether or not decoding of the encoded audio signal includes any processing which exceeds a predetermined decoding time. As a result, processing for adjusting synchronization of the audio signal with the video signal can be performed well in advance.

Note that it may be that the separating unit separates, from the received multiplexed data, the audio stream packet including the encoded audio signal which has been encoded using one of a first encoding mode and a second encoding mode, the first encoding mode being a mode in which the audio signal is encoded in accordance with MPEG-2 AAC scheme, the second encoding mode being a mode in which the audio signal is encoded in accordance with the MPEG-2 AAC scheme, and is also encoded including auxiliary information for extending a high frequency component or an output channel count of a basic signal obtained in the first encoding mode; the analyzing unit analyzes, based on the encoding information, which one of the first encoding mode and the second encoding mode has been used in the encoding of the encoded audio signal included in the separated audio stream packet; and the decoding unit adjusts output timings of the audio signal and the video signal by an amount of time necessary for extending the high frequency component or the output channel count of the basic signal obtained in the first encoding mode, when the analysis result obtained by the analyzing unit indicates that the second encoding mode has been used in the encoding. With this, the encoding information describes whether the audio signal has been converted into the encoded audio signal using the first encoding mode, or using the second encoding mode; and thus, it is possible for the digital broadcast receiving apparatus to perform processing for adjusting synchronization of the audio signal with the video signal before starting decoding of the audio stream packet.

Further, it may be that when the analysis result obtained by the analyzing unit indicates that the second encoding mode has been used in the encoding of the encoded audio signal included in the separated audio stream packet, the decoding unit delays outputting the video signal by a predetermined time than the case where the first encoding mode has been used in the encoding. With this, the decoding unit can decode the video signal in a normal way, and adjust synchronization of the video signal and the audio signal by delaying output of the video signal obtained through the decoding by a predetermined time. As a result, it is possible to adjust synchronization easily with lower processing load.

Furthermore, it may be that when the analysis result obtained by the analyzing unit indicates that the second encoding mode has been used in the encoding of the encoded audio signal included in the separated audio stream packet, the decoding unit starts decoding of the encoded audio signal earlier by a predetermined time than the case where the first encoding mode has been used in the encoding. With this, it is possible to know, before the decoding unit starts decoding, whether the audio signal has been converted using the first encoding mode, or using the second encoding mode; and thus it is possible to adjust synchronization of the video signal and the audio signal easily by starting decoding of the encoded audio signal earlier by a predetermined time.

Further, it may be that the predetermined time is a delay time that is an additional time required for decoding processing of the encoded audio signal in the second mode compared to decoding processing of the encoded audio signal in the first mode.

Further, it may be that the analyzing unit further analyzes, based on the encoding information, an extended channel count of the basic signal, the extended channel count of the basic signal being an output channel count of the basic signal of the case where the output channel count of the basic signal is extended using the auxiliary information, and when the output channel count of the digital broadcast receiving apparatus is different from the channel count indicated by the encoding information, the decoding unit: (i) extends the channel count of the basic signal directly into the output channel count of the digital broadcast receiving apparatus; and (ii) adjusts output timings of the audio signal and the video signal by an amount of time necessary for extending the output channel count of the basic signal. With this, it is possible for the decoding unit to directly extend the channel count of the basic signal into the output channel count of the digital broadcast receiving apparatus while omitting double work in that the decoding unit first extends the channel count of the basic signal into the channel count that is identical to the original sound using the auxiliary information, and then converting it into the output channel count of the digital broadcast receiving apparatus. Therefore, while adjusting synchronization of the video signal and the audio signal, it is possible to decode the audio signal compatible to the equipment of the digital broadcast receiving apparatus efficiently.

Further, it may be that the decoding unit includes: a multi-channel estimating unit which estimates channel extension information, using one of channel-extension related information included in the basic signal, and an initial value or a recommended value used for channel count extension from 2-channel of the basic signal into 5.1-channel of a multi-channel signal, the channel extension information being information for extending the channel count of the basic signal to the output channel count of the digital broadcast receiving apparatus. Also it may be that the decoding unit extends the channel count of the basic signal directly into the output channel count of the digital broadcast receiving apparatus, using the channel extension information estimated by the multi-channel estimating unit. With this, it is possible for the decoding unit to omit extending the channel count of the basic signal into the channel count that is identical to that of the original sound using the auxiliary information, and to directly extend the channel count of the basic signal into the output channel count of the digital broadcast receiving apparatus.

Further, it may be that the analyzing unit further analyzes, based on the encoding information, data length of the basic signal of the encoded audio signal, and the decoding unit: (i) determines whether or not the basic signal has been correctly decoded by comparing the data length of the basic signal obtained by the analyzing unit and data length of the basic signal obtained though decoding of the encoded audio signal; and (ii) extends, using the channel extension information estimated by the multi-channel estimating unit, the channel count of the basic signal directly into the output channel count of the digital broadcast receiving apparatus, when determined that the basic signal has been correctly decoded. With this, when the basic signal has been decoded correctly, it is possible to directly extend the channel count of the basic signal into the output channel count of the digital broadcast receiving apparatus without using the auxiliary information.

Further, it may be that the decoding unit (i) further determines whether or not the channel extension processing using the auxiliary information has been correctly performed, when determined that the basic signal has been correctly decoded; and (ii) outputs only the basic signal without adjusting output timings of the audio signal and the video signal, when determined that an error has occurred in the channel extension processing using the auxiliary information. With this, it is possible to output only the basic signal when the basic signal has been decoded correctly.

### Effects of the Invention

According to the present invention, in the digital broadcast receiving apparatus, it is possible to know information specific to the encoding scheme before starting decoding of the encoded audio signal even without analyzing the details of the encoded audio signal up to the end; and thus it is possible to easily perform optimal synchronization control according to the encoding scheme of the audio signal.

### Brief Description of Drawings

FIG. 1 (a), (b) and (c) are diagrams showing format structures of PES packet and section formats.
FIG. 2 (a) and (b) are diagrams showing detailed format structures of PAT and PMT.
FIG. 3 is a diagram showing the structure of a conventional digital broadcast transmitting apparatus.
FIG. 4 is a diagram showing the structure of a conventional digital broadcast receiving apparatus.
FIG. 5 is a flowchart showing the flow of the receiving processing performed in a conventional digital broadcast receiving apparatus.
FIG. 6 is a diagram showing a model in which one line AAC bitstream is formed from a multiplexed TSP sequence in a conventional digital broadcast receiving apparatus.
FIG. 7 (a), (b), (c), and (d) are diagrams of respective format structures of AAC, AAC+SBR, and MPEG-Surround.
FIG. 8 is a diagram showing the structure of an audio signal decoding unit which can decode MPEG-Surround.
FIG. 9 is a diagram showing an implementation model of AV synchronization.
FIG. 10 is a block diagram showing an example of the structure of a digital broadcast receiving apparatus including an audio signal decoding unit with a synchronization adjusting function which can decode MPEG-Surround.
FIG. 11 is a flowchart showing the flow of the receiving processing performed in a digital broadcast receiving apparatus including an audio signal decoding unit which can decode MPEG-Surround.
FIG. 12 is a structural diagram of a digital broadcast transmitting apparatus according to a first embodiment.
FIG. 13 is a structural diagram of a digital broadcast receiving apparatus according to the first embodiment.
FIG. 14 is a flowchart of the flow of the receiving processing performed in the digital broadcast receiving apparatus according to the first embodiment.
FIG. 15 is a structural diagram of a digital broadcast transmitting apparatus according to a second embodiment.
FIG. 16 is a diagram showing an example of an area where a descriptor, indicating the details of the encoding information, is stored by the descriptor updating unit shown in FIG. 15.
FIG. 17 is a diagram showing an example of the channel count in a digital broadcast receiving apparatus according to a third embodiment.
FIG. 18 is a block diagram showing the structure of an audio signal decoding unit included in the digital broadcast receiving apparatus according to the third embodiment.
FIG. 19 is a block diagram showing the structure of an audio signal decoding unit included in a digital broadcast receiving apparatus according to a fourth embodiment.
FIG. 20 is a flowchart of the flow of the receiving processing performed in the digital broadcast receiving apparatus according to the fourth embodiment.

### Numerical References

- 1, 10, 151: Digital broadcast transmitting apparatus
- 2, 20, 172: Digital broadcast receiving apparatus
- 11: Audio signal encoding unit
- 12: Video signal encoding unit
- 13a, 13b, 13c, 13d: Packetizing unit
- 14: Multiplexing unit
- 15: Channel encoding/modulating unit
- 16, 21: Antenna
- 17: Descriptor updating unit
- 22: Demodulating/channel decoding unit
- 23: Demultiplexing unit
- 24a, 24b, 24c, 24d: Packet analyzing unit
- 25, 185, 195: Audio signal decoding unit
- 26: Video signal decoding unit
- 27: Program information analyzing unit
- 28: Encoding information analyzing unit

### Best Mode for Carrying Out the Invention

Hereinafter, embodiments of the present invention will be described with reference to the drawings. Note that in the embodiments, descriptions are given of an exemplary case of a digital broadcast transmitting system using MPEG-Surround (hereinafter referred to as "MPS") as an audio encoding scheme.

### (First embodiment)

In the present embodiment, an encoding information packet including a new PID is generated, and the generated encoding information packet is transmitted with information, indicating whether or not MPS is used, being described.

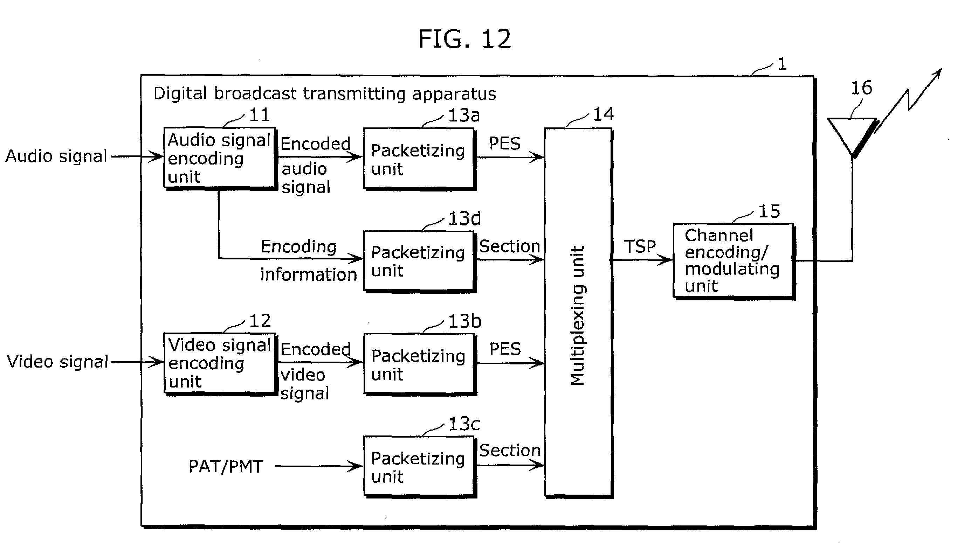

FIG. 12 is a block diagram showing the structure of a digital broadcast transmitting apparatus according to the first embodiment of the present invention. A digital broadcast transmitting apparatus 1 is a digital broadcast transmitting apparatus which generates an encoding information packet with respect to an audio signal, and transmits the generated encoding information packet with information, indicating whether or not MPS is used, being described. The digital broadcast transmitting apparatus 1 includes an audio signal encoding unit 11, a video signal encoding unit 12, packetizing units 13a through 13d, a multiplexing unit 14, a channel encoding/modulating unit 15, and an antenna 16.

Each of audio signals and video signals making up programs is respectively inputted into the audio signal encoding unit 11 and the video signal encoding unit 12, and converted into digital signals. The packetizing units 13a and 13b add header information to the respective converted digital signals and packetize them into PES. Here, the audio signal encoding unit 11 and the packetizing unit 13a are an example of "an audio stream packet generating unit which converts the audio signal into an encoded audio signal by encoding the audio signal and to generate an audio stream packet including the encoded audio signal". The video signal encoding unit 12 and the packetizing unit 13b are an example of "a video stream packet generating unit which converts the video signal into an encoded video signal by encoding the video signal, and to generate a video stream packet including the encoded video signal". Furthermore, the audio signal encoding unit 11 is an example of "an audio encoding unit which converts the audio signal into the encoded audio signal using one of a first encoding mode and a second encoding mode, the first encoding mode being a mode in which the audio signal is encoded in accordance with MPEG-2 AAC scheme, the second encoding mode being a mode in which the audio signal is encoded in accordance with the MPEG-2 AAC scheme, and is also encoded including auxiliary information for extending a high frequency component or an output channel count of a basic signal obtained in the first encoding mode", and "an encoding information generating unit which generates the encoding information indicating which one of the first encoding mode and the second encoding mode has been used by the audio encoding unit in the conversion of the audio signal into the encoded audio signal" At the same time, data signals, PAT and PMT are also inputted into the packetizing unit 13c, and packetized in a section format. Furthermore, information relating to processing in the audio signal encoding unit 11 is similarly packetized, as an encoding information, by the packetizing unit 13d in a section format. The packetizing unit 13c and the packetizing unit 13d are an example of "a data packet generating unit that generates a data packet which is analyzed by a digital broadcast receiving apparatus before decoding the audio stream packet is started, the data packet including encoding information which is not included in header information of the audio stream packet, and which indicates whether or not decoding of the encoded audio signal includes a processing which causes decoding time of the encoded audio signal to exceed a predetermined decoding time". Furthermore, the packetizing unit 13d is an example of "the data packet generating unit which generates an independent data packet including only the encoding information as data" and "the data packet generating unit which generates the data packet in a format defined as a section format". Subsequently, the multiplexing unit 14 time-multiplexes all PES and section packets, the channel encoding/modulating unit 15 performs transmitting processing on the time-multiplexed PES and section packets. Then the PES and section packets are transmitted through the antenna 16. The multiplexing unit 14, the channel encoding/modulating unit 15 and the antenna 16 are an example of "a transmitting unit which multiplexes the audio stream packet, the data packet, and the video stream packet so as to generate multiplexed data, and transmit the generated multiplexed data via a broadcast wave".

Here, a significant effect can be obtained in optimal operation of a receiving apparatus by selecting, as encoding information, information which cannot be known simply from the format structure of the encoded audio signal outputted by the audio signal encoding unit 11 or information which is not described in the header information of the encoded signal, and by transmitting the selected information to the receiving apparatus. For example, when a flag, indicating whether the encoding scheme used by the audio signal encoding unit 11 is AAC or MPS, is packetized separately in a section format as encoding information, the receiving apparatus can know whether the encoding scheme of the audio signal is AAC or MPS earlier than the start of the decoding of the basic signal. In a conventional method, as shown in FIG. 7 (c) and (d), in each frame of audio signals, the channel extension information field is described following the basic signal field; and thus, whether the audio signal has been encoded in AAC or MPS cannot be known till extracting all basic signals for each frame from among a plurality of packets, and decoding the extracted basic signals. On the other hand, according to the digital broadcast transmitting apparatus 1 according to the present embodiment, a flag, indicating whether the audio signal has been encoded in AAC or MPS, is packetized separately from the PES packet of the audio signal as encoding information in a section format; and thus, the encoding information can be known before starting decoding of the audio signal. As a result, the receiving apparatus can obtain such a significant effect that synchronous output timing of the audio signal and video signal can be reliably adjusted.

Note that it is also possible to adjust the synchronization timing by reflecting the output timing taking the encoding information into account to the PTS of the PES packet; however, there is a problem of compatibility with apparatuses which support only conventional MPEG-2 AAC.

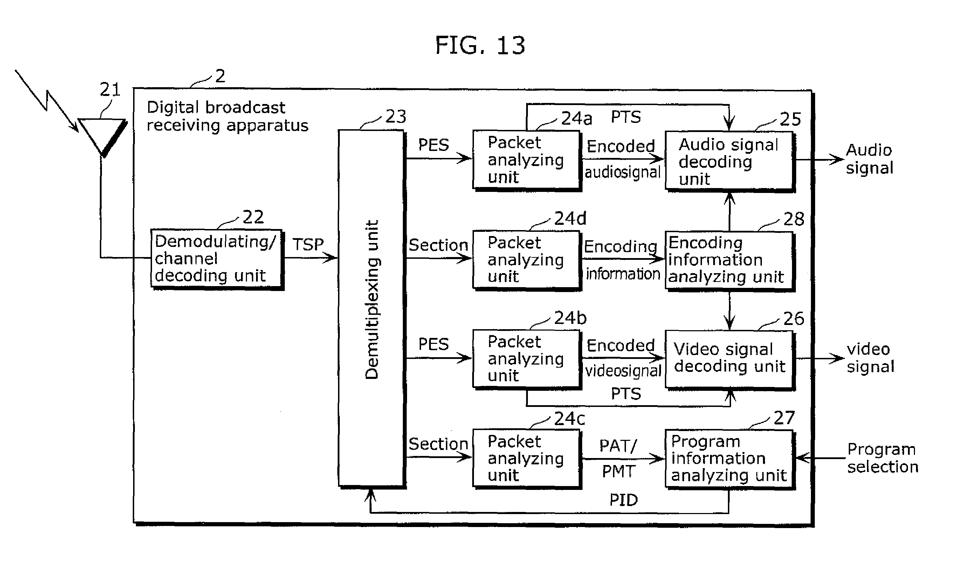

FIG. 13 is a block diagram showing the structure of a digital broadcast receiving apparatus according to the first embodiment of the present invention. A digital broadcast receiving apparatus 2 is a digital broadcast receiving apparatus which analyzes a section packet in which encoding information of the audio signal encoded by the digital broadcast transmitting apparatus 1 is described, so as to decode the audio signal according to the encoding scheme used when encoding, and to perform synchronous reproduction of the decoded video signal and audio signal more accurately. The digital broadcast receiving apparatus 2 includes an antenna 21, a demodulating/channel decoding unit 22, a demultiplexing unit 23, packet analyzing units 24a, 24b, 24c, and 24d, an audio signal decoding unit 25, a video signal decoding unit 26, a program information analyzing unit 27, and a decoding information analyzing unit 28.

The demodulating/channel decoding unit 22 performs receiving processing on digital broadcast wave received via the antenna 21, and outputs a multiplexed TSP sequence. The demultiplexing unit 23 selects a PAT packet and PMT packets from the received TSP sequence, and outputs the selected PAT packet and PMT packets to the packet analyzing unit 24c. The packet analyzing unit 24c extracts PAT and PMTs from the PAT packet and the PMT packets inputted by the demultiplexing unit 23, and outputs the extracted PAT and PMTs to the program information analyzing unit 27. The program information analyzing unit 27 extracts program information from the PAT and PMTs inputted by the packet analyzing unit 24c, and presents a user with the detailed information of respective programs in service. The program information analyzing unit 27 informs the demultiplexing unit 23 of the PIDs of the PES packets in which audio signals and video signals making up the desired program are stored, according to the program selected by the user from among the presented detailed information of the programs. As a result, audio, video and data packets making up the program selected by the user are selected. The antenna 21 and the demodulating/channel decoding unit 22 are an example of "a receiving unit which receives the multiplex broadcast". The demultiplexing unit 23 is an example of "a separating unit which separates, from multiplexed data, an audio stream packet, a video stream packet, and a data packet, the multiplexed data being received by the receiving unit via the multiplex broadcast, the audio stream packet including an encoded audio signal which is an audio signal that has been encoded, the video stream packet including an encoded video signal which is a video signal that has been encoded, the data packet being other than the audio stream packet and the video stream packet", and "the separating unit which separates, from the received multiplexed data, the audio stream packet including the encoded audio signal which has been encoded using one of a first encoding mode and a second encoding mode, the first encoding mode being a mode in which the audio signal is encoded in accordance with MPEG-2 AAC scheme, the second encoding mode being a mode in which the audio signal is encoded in accordance with the MPEG-2 AAC scheme, and is also encoded including auxiliary information for extending a high frequency component or an output channel count of a basic signal obtained in the first encoding mode". The packet analyzing unit 24d is an example of "an analyzing unit which analyzes encoding information from the separated data packet before decoding the audio stream packet is started, the encoding information being information which is not included in header information of the audio stream packet, and which indicates whether or not decoding of the encoded audio signal includes a processing which causes decoding time of the encoded audio signal to exceed a predetermined decoding time", and "the analyzing unit which analyzes, based on the encoding information, which one of the first encoding mode and the second encoding mode has been used in the encoding of the encoded audio signal included in the separated audio stream packet". The audio signal decoding unit 25 and the video signal decoding unit 26 are an example of "a decoding unit which adjusts output timings of the audio signal and the video signal by an amount of time that the decoding time of the audio signal exceeds the predetermined decoding time, when the encoding information indicates the decoding of the encoded audio signal includes the processing which causes the decoding time of the encoded audio signal to exceed the predetermined decoding time" and "the decoding unit which adjusts output timings of the audio signal and the video signal by an amount of time necessary for extending the high frequency component or the output channel count of the basic signal obtained in the first encoding mode, when the analysis result obtained by the analyzing unit indicates that the second encoding mode has been used in the encoding". Further, the video signal decoding unit 26 is an example of "when the analysis result obtained by the analyzing unit indicates that the second encoding mode has been used in the encoding of the encoded audio signal included in the separated audio stream packet, the decoding unit which delays outputting the video signal by a predetermined time than the case where the first encoding mode has been used in the encoding". Further, the audio signal decoding unit 25 is an example of "when the analysis result obtained by the analyzing unit indicates that the second encoding mode has been used in the encoding of the encoded audio signal included in the separated audio stream packet, the decoding unit which starts decoding of the encoded audio signal earlier by a predetermined time than the case where the first encoding mode has been used in the encoding".

Of data packets, in particular, as to a packet relating to encoding information of the audio signal, the encoding information is extracted by the packet analyzing unit 24d, and inputted to the encoding information analyzing unit 28. The encoding information analyzing unit 28 analyzes, for example, whether the audio signal has been encoded in MPEG-2 AAC or MPS, based on the encoding information inputted by the packet analyzing unit 24d, and then outputs the analysis result to the audio signal decoding unit 25 and the video signal decoding unit 26. The analysis of the encoding information is performed, for example, while the packet analyzing unit 24a and the packet analyzing unit 24b are extracting encoded audio and video signals which are substantial data from the audio and video packets making up the program selected by the user. The audio signal decoding unit 25 decodes the encoded audio signal inputted by the packet analyzing unit 24a according to the encoding scheme inputted by the encoding information analyzing unit 28. The video signal decoding unit 26 decodes the encoded video signal inputted by the packet analyzing unit 24b, and adjusts, with respect to the designated PTS, output timing of the decoded video signal according to the encoding information of the audio signal inputted by the encoding information analyzing unit 28. With this, the video signal decoding unit 26 outputs the video signal such that optimal synchronous reproduction of the audio and video signals can be performed.

Note that the description has been given above of the method for adjusting synchronization of the audio and video signals by the video signal decoding unit 26 adjusting output timing of the video signal; however, the present invention is not limited to the described example. It may be such that when encoding information indicates that the audio signal has been encoded in MPS, the audio signal decoding unit 25 starts decoding of the audio signal earlier by a predetermined time than the case where the audio signal has been encoded in MPEG-2 AAC, and the video signal decoding unit 26 decodes and outputs the video signal in a normal way.

More particularly, respective audio and video packets are divided into header information and encoded signal, and are extracted by the packet analyzing unit 24a and the packet analyzing unit 24b. Then the respective encoded signals are decoded by the audio signal decoding unit 25 and the video signal decoding unit 26.

Hereinafter, operations of the digital broadcast receiving apparatus 2 are described in an exemplary case where the encoding information is a flag indicating the encoding scheme of the audio signal is AAC or MPS.

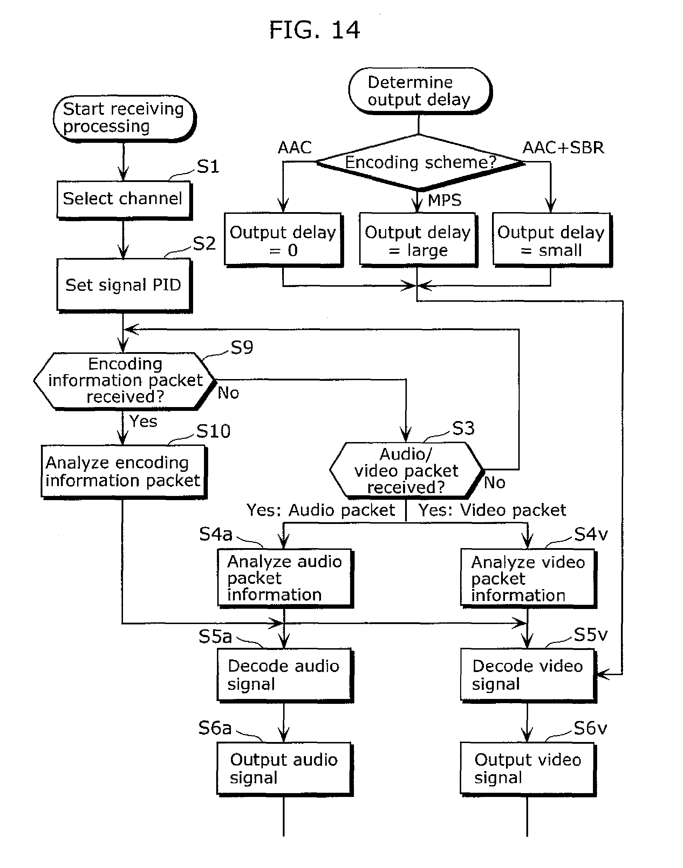

FIG. 14 is a flowchart showing the flow of the receiving processing performed in the digital broadcast receiving apparatus according to the present embodiment. After the channel selection of a program made by the user (S1), the program information analyzing unit 27, shown in FIG. 13, identifies signal PIDs of packets making up the selected program by referring to PAT and PMT, and makes a setting to receive packets indicated by the identified PIDs. (S2). Subsequently, the digital broadcast receiving apparatus 2 starts receiving the packets (S9 and S3). When the received packet is encoding information (Yes in S9), the packet analyzing unit 24d analyzes the encoding information packet (S10), and determines whether the encoding scheme of the audio signal is AAC or MPS. When the received packet is not the encoding information packet (No in S9), the demultiplexing unit 23 determines whether the received packet is an audio packet or video packet (S3). When the received packet is neither an audio packet nor video packet (No in S3), the processing is returned to Step S9, and stands by till a new packet is received.

When the received packet is an audio packet (Yes in S3), the packet analyzing unit 24a analyzes the information of the received audio packet, and extracts the encoded audio signal (S4a). Subsequently, the audio signal decoding unit 25 decodes the extracted encoded audio signal (S5a). Note that by this time, in the case where an analysis of whether the encoding scheme of the audio signal is MPEG-2 AAC or MPS has been performed in Step S10, the audio signal decoding unit 25 decodes the encoded audio signal according to the decoding scheme indicated by the encoding information. The audio signal decoding unit 25 outputs the audio signal obtained through the decoding according to PTS (S6a).

When the received packet is a video packet in Step S3 (Yes in S3), the packet analyzing unit 24b analyzes the information of the received video packet, and extracts the encoded video signal (S4v). Subsequently, the video decoding unit 26 decodes the extracted encoded video signal (S5v). Note that by this time, in the case where an analysis of whether the encoding scheme of the audio signal is MPEG-2 AAC or MPS has been performed, the video signal decoding unit 26 determines delay time from timing indicated by PTS for outputting the decoded video signal, according to whether the inputted encoding scheme is MPEG-2 AAC, MPS, or (AAC+SBR). When the encoding scheme is MPEG-2 AAC, the video signal decoding unit 26 outputs the video signal obtained through the decoding as it is according to PTS. When the encoding scheme is MPS, the video signal decoding unit 26 outputs the video signal with a large output delay time. Further, when the encoding scheme is (AAC+SBR), the video signal decoding unit 26 outputs the video signal with a small output delay time (S6v). More particularly, when the encoding scheme is MPS, the video signal decoding unit 26 delays outputting the video signal obtained through the decoding, by an amount of time equivalent to a predetermined processing time of MPS with respect to a predetermined timing indicated by PTS (S6v). This is the same in the case of (AAC+SBR), too.

As described, by packetizing the encoding information indicating the encoding scheme of the audio signal in a section format and multiplexing into a TSP sequence, prompt determination of the encoding scheme of the encoded audio signal is possible. Therefore, the packet analyzing unit 24d, which analyzes the packet describing the encoding information, can determine whether or not correction of output timing of the video signal is necessary before the audio signal decoding unit 25 and the video signal decoding unit 26 start decoding of the encoded audio and video signals, that is, before starting the audio signal decoding processing S5a and the video signal decoding processing S5b. As a result, it is possible for the video signal decoding unit 26 to perform optimization processing, such as delaying the start of decoding of the encoded video signal according to delay amount in decoding of the encoded audio signal, or adjusting buffer amount to delay the output of the decoded video signal, regardless of progress of the decoding of the audio signal S5a, which can be performed only after decoding the basic signal of the audio signal in a conventional method.

Note that the above delay time is adjusted by causing the audio signal decoding unit 25, the video signal decoding unit 26, or a memory not shown, to store a value indicating delay time which is associated with the encoding scheme in advance, such as n seconds for SBR, and n seconds for MPS. Whether the audio signal decoding unit 25 or the video signal decoding unit 26 stores such delay time can be determined depending on which processing unit adjusts synchronization. For example, it may be that when the audio signal decoding unit 25 adjusts synchronization by starting decoding early, the audio signal decoding unit 25 stores the delay time, and when the video signal decoding unit 26 adjusts synchronization by delaying output timing of the decoded video signal, the video signal decoding unit 26 stores the delay time. Further, the delay time changes depending on processing capacity of the audio signal decoding unit, such as operation speed of CPU; and thus, the delay time of video signal output is defined according to the model of the digital broadcast receiving apparatus. The delay time is an example of "the predetermined time which is a delay time that is an additional time required for decoding processing of the encoded audio signal in the second mode compared to decoding processing of the encoded audio signal in the first mode".

Note that the packetizing unit 13d is an example of "the data packet generating unit which generates the data packet for each audio stream packet generated by the audio stream packet generating unit". The multiplexing unit 14 and the channel encoding/modulating unit 15 are an example of "when data packet includes information that is identical to information included in an immediately preceding data packet, the transmitting unit which transmits multiplexed data in which the data packet is not multiplexed". Since it is not likely that the encoding information changes continuously within a single program, it is not necessary to multiplex an encoding information packet for each audio packet. When the encoding scheme of the encoded signal included in the audio packet is the same (encoding scheme) as the encoding scheme indicated by the encoding information included in the immediately preceding audio packet, it is possible to omit multiplexing the encoding information packet. For example, as for audio signals making up the same program, it may be that only a single encoding information packet for the program is multiplexed. This improves transmission efficiency.

On the other hand, at the time of start up of the receiving apparatus, or switching of the viewing program, it is desirable to finish analyzing the encoding information packet S10 early enough before starting the audio signal decoding S5a and video signal decoding S5v; and thus, when sending out an encoding information packet is performed exceeding a predetermined interval from sending the immediately preceding encoding information packet, it may be that the encoded information packet having the same information is sent out again without omitting multiplexation.

### (Second embodiment)

In the first embodiment, the case has been described where encoding information is described in individual packets having a new PID in a section format, and the packet is multiplexed into TSP for transmission to the digital broadcast receiving apparatus. In the second embodiment, a new packet is not generated, but the encoding information is embedded into PMT as a descriptor for transmission.

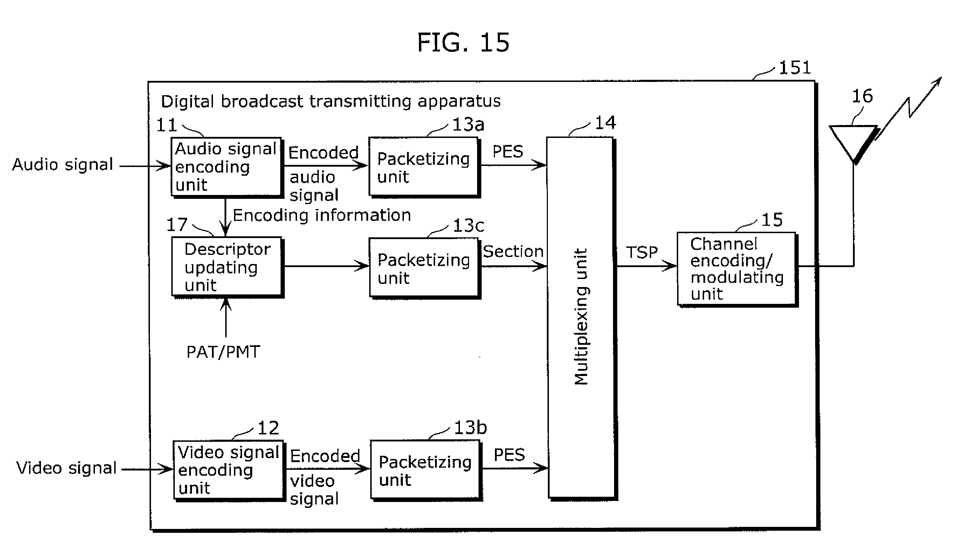

FIG. 15 is a block diagram showing the structure of a digital broadcast transmitting apparatus 151 according to the second embodiment of the present invention. The digital broadcast transmitting apparatus 151 includes an audio signal encoding unit 11, a video signal encoding unit 12, packetizing units 13a, 13b, and 13c, a multiplexing unit 14, a channel encoding/modulating unit 15, and an antenna 16.

The digital broadcast transmitting apparatus 151 according to the second embodiment features inclusion of a descriptor updating unit 17 instead of a packetizing unit 13d which packetizes encoding information of audio signals.

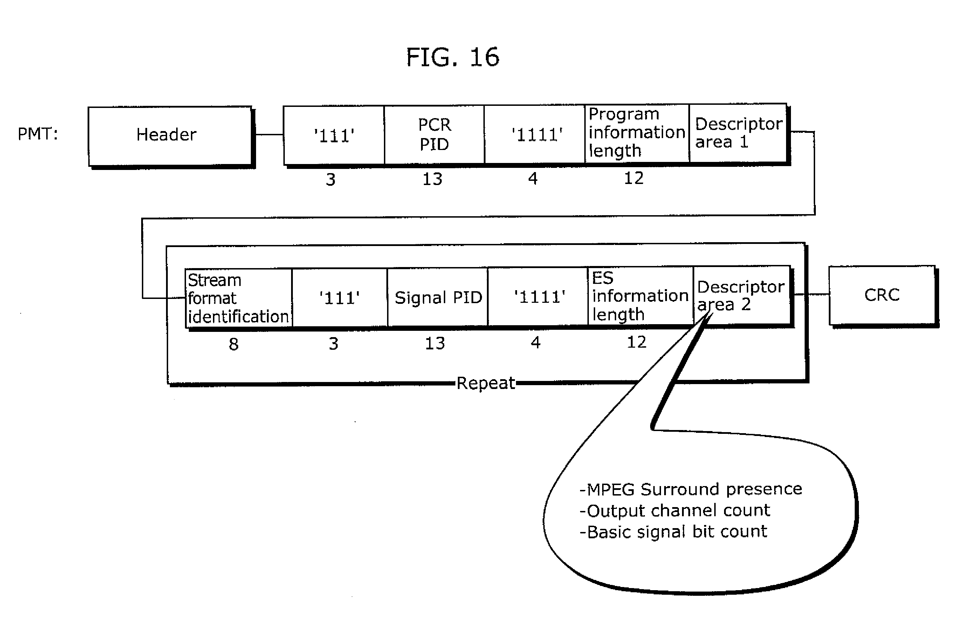

FIG. 16 is a diagram showing an example of an area where a descriptor, indicating the details of the encoding information, is stored by the descriptor updating unit shown in FIG. 15. The descriptor updating unit 17 is an example of "the data packet generating unit which: (i) represents, using a descriptor, the encoding information indicating which one of the first encoding mode and the second encoding mode has been used by the audio encoding unit in the conversion of the audio signal into the encoded audio signal; and (ii) generates a packet in which the descriptor is embedded into a descriptor area, the descriptor area being repeated for each of elementary streams within a program map table (PMT)". The audio signal encoding unit 11, the packetizing unit 13d, and the descriptor updating unit 17 are an example of "the data packet generating unit which further generates a data packet including encoding information indicating an extended channel count of the basic signal, the extended channel count of the basic signal being an output channel count of the basic signal of the case where the output channel count of the basic signal is extended using the auxiliary information", and "the data packet generating unit which further generates a data packet including encoding information indicating data length of the basic signal". The descriptor updating unit 17 embeds encoding information as a descriptor of PMT or other SI table, into a descriptor area. The encoding information is processing information in the audio signal encoding unit 11, indicating, for example, presence of MPS, output channel count, bit count of the encoded basic signal or the like. When the descriptor updating unit 17 inserts a descriptor of the encoding information into PMT, it is preferable, for example, to insert it into the descriptor area 2 described for each elementary stream in FIG. 16.

Then, the packetizing unit 13c packetizes the PAT and the PMT into which the descriptors indicating the encoding information are inserted. The multiplexing unit 14 multiplexes the PES packets of the encoded audio signal, the PES packets of the encoded video signal, and the PAT and the PMT packets. The multiplexed TSP is transmitted by broadcast wave via the channel encoding/modulating unit 15 and the antenna 16.

As described, according to the digital broadcast transmitting apparatus 151 of the embodiment 2, as shown in FIG. 6, PIDs, indicating elementary stream packets which store audio signals making up programs, are described in the PMT packets; and thus, by embedding the descriptors indicating the encoding information into the descriptor area which is associated with each PID, the encoding information can be efficiently transmitted.

### (Third embodiment)

In the present embodiment, the case will be described where encoding information is an extended channel count (of an original sound).

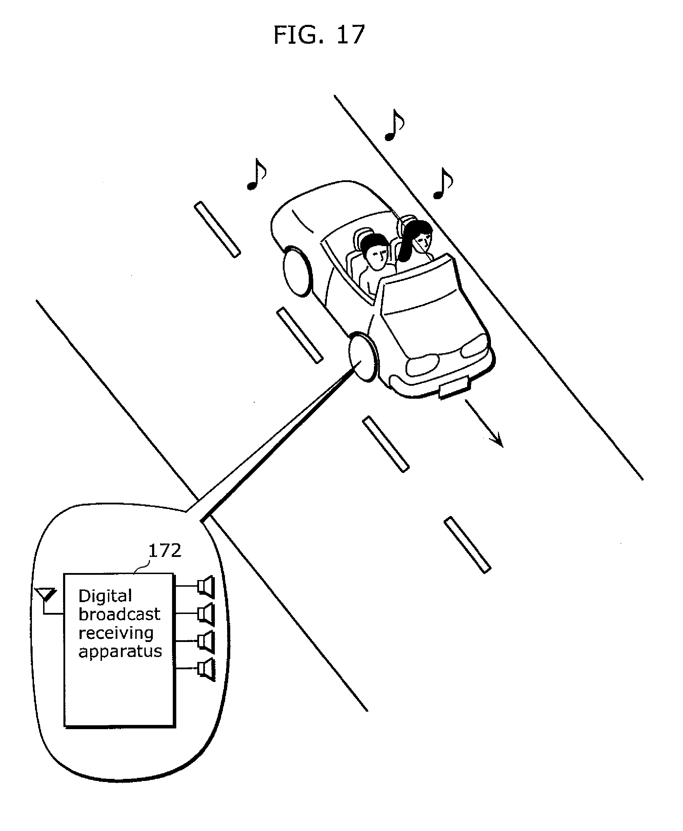

FIG. 17 is a diagram showing an example of a vehicle equipped with a digital broadcast receiving apparatus according to the third embodiment. As shown in FIG. 17, multi-channel audio reproduction using four loudspeakers is common for a vehicle. On the other hand, in MPS, for example, an audio signal whose original sound is 5.1-channel is down-mixed into 2-channel and encoded. Then, channel extension information is multiplexed to the encoded signal for transmission. The channel extension information is information for reconstructing the 2-channel down-mixed signal into 5.1-chancel signal. In such a case, under present circumstances, the in-vehicle digital broadcast receiving apparatus 172 reconstructs the original sound of 5.1-channel from the 2-channel down-mixed signal according to the multiplexed channel extension information, and then further down-mixes the reconstructed original sound into 4-channel audio signal.

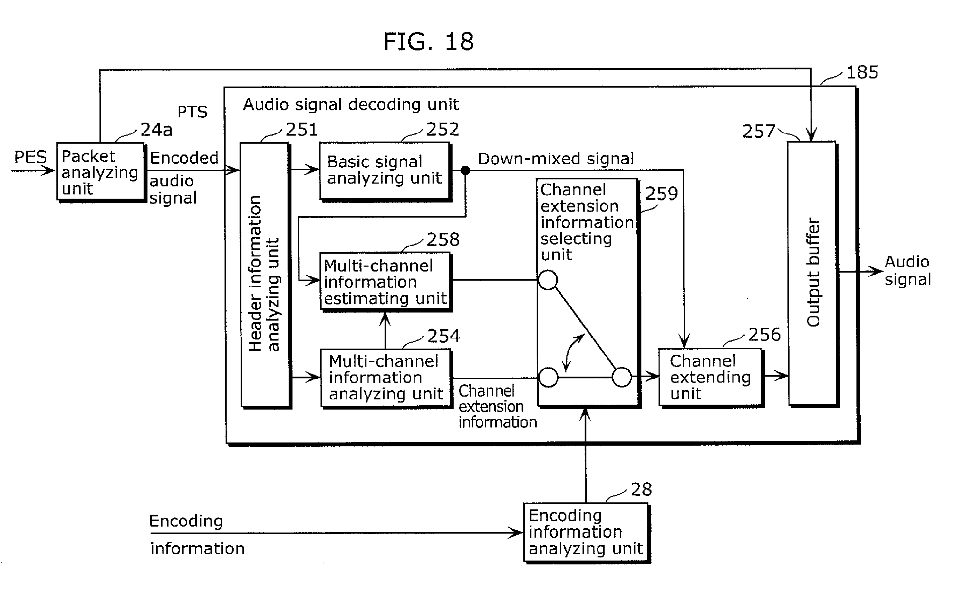

FIG. 18 is a block diagram showing the structure of the audio signal decoding unit in the digital broadcast receiving apparatus according to the third embodiment of the present invention. FIG. 18 shows a part of the digital broadcast receiving apparatus 2 in FIG. 13. The structure of the audio signal decoding unit 185 is different from that of the audio signal decoding unit 25 in FIG. 13. The audio signal decoding unit 185 according to the third embodiment includes a header information analyzing unit 251, a basic signal analyzing unit 252, a multi-channel information analyzing unit 254, a channel extending unit 256, an output buffer 257, a multi-channel information estimating unit 258 and the channel extension information selecting unit 259. Here, the encoding information analyzing unit 28 is an example of "the analyzing unit which further analyzes, based on the encoding information, an extended channel count of the basic signal, the extended channel count of the basic signal being an output channel count of the basic signal of the case where the output channel count of the basic signal is extended using the auxiliary information".

The encoded audio signal extracted by the packet analyzing unit 24a has, as shown in FIG. 7(d), a frame structure in which data of header, basic signal, channel extension information and padding area are described in the mentioned order. The header information analyzing unit 251 analyzes the stream structure of such encoded audio signal based on the header, and extracts the basic signal and the channel extension information in the aforementioned order starting from the top of the frame. The channel extending unit 256 is an example of "when the output channel count of the digital broadcast receiving apparatus is different from the channel count indicated by the encoding information, the decoding unit which: (i) extends the channel count of the basic signal directly into the output channel count of the digital broadcast receiving apparatus; and (ii) adjusts output timings of the audio signal and the video signal by an amount of time necessary for extending the output channel count of the basic signal", and "the decoding unit which extends the channel count of the basic signal directly into the output channel count of the digital broadcast receiving apparatus, using the channel extension information estimated by the multi-channel estimating unit". The channel extending unit 256 reconstructs a multi-channel audio signal of 5.1-channel using the down-mixed signal outputted by the basic signal analyzing unit 252 and the channel extension information outputted by the multi-channel information analyzing unit 254. Alternatively, the channel extending unit 256 reconstructs, for example, a multi-channel audio signal of 4-channel via the channel extension information selecting unit 259 using the channel extension information obtained by the multi-channel information estimating unit 258. Further, the multi-channel information estimating unit 258 is an example of "a multi-channel estimating unit which estimates channel extension information, using one of channel-extension related information included in the basic signal, and an initial value or a recommended value used for channel count extension from 2-channel of the basic signal into 5.1-channel of a multi-channel signal, the channel extension information being information for extending the channel count of the basic signal to the output channel count of the digital broadcast receiving apparatus".

Here, when the encoded audio signal is AAC bitstream, an output of the basic signal analyzing unit 252 is a normal stereo signal, and the channel extension information to be analyzed by the multi-channel information analyzing unit 254 does not exist in the bitstream. At this time, using the stereo signal outputted by the basic signal analyzing unit 252, the multi-channel information estimating unit 258 estimates channel extension information. Alternatively, it may be that the channel extension information outputted by the multi-channel information estimating unit 258 is information associated with initial value or recommended value of the channel extending unit 256, and estimation, which is not correlated with the stereo signal, is made. The channel extending unit 256 selects channel extension information to be used according to the output of the encoding information analyzing unit 28, which allows the output of the multi-channel audio signal under delay and output control similar to the case of MPS, even when the received encoded audio signal is a conventional AAC stereo signal. Here, due to characteristics of the AAC format, the output of the basic signal analyzing unit 252 is not limited to stereo signals, but the output may be a monaural signal or the multi-channel signal of more than 3-channel; and thus the effects of the present invention is not limited to the stereo AAC.

Furthermore, estimation of channel extension information is not limited to the case where the encoded audio signal is AAC, but as a matter of course, similar effects can also be obtained in the case of MPS. For example, when channel extension into a channel count different from the channel count designated in the bitstream is desired, estimated channel extension information can be used without using the channel extension information in the bitstream. At this time, estimation using the channel extension information in the bitstream allows higher precision estimation. This is because inter-channel level differences and the like can be effective information regardless of the extended channel count.

Further, by transmitting the extended channel count as encoding information, it is possible to select the channel extension information in the bitstream and the estimated channel information more efficiently. Due to compatible format structures of AAC and MPS, similar to the case where whether MPS is used or not cannot be determined till a bitstream is analyzed up to the end, the extended channel count is also information which cannot be known before the multi-channel information analyzing unit 254. However, There are many cases where the extended channel count and reproduction environment are not matched, for example, as in the case where a general in-vehicle loudspeaker includes four loudspeakers, but the extended multi-channel audio signal is 5.1-channel. More particularly, as explained in FIG. 17, it is the case where reproduction of 4-channel is desired as in the in-vehicle digital broadcast receiving apparatus 172 even through the original sound is 5.1-channel. However, if the extended channel count cannot be determined till the bitstream is analyzed up to the end, delayed setting of decoding processing or extra processing occurs. Hence, by informing, using the encoding information in advance, the audio signal decoding unit 25 of the extended channel count, it is possible to select the channel extension processing optimal to reproduction environment with sufficient promptness. Note that in this case, for example, it may be that the channel count of the original sound is described by using a flag indicating whether MPS is used or not. For example, it may be that when the flag indicating "MPS is used" is described as encoding information, it is assumed that the channel count of the original sound is 5.1-channel, and when the flag indicating "MPS is not used" is described, it is assumed that the channel count of the original sound is 2-channel.

More particularly, note that examples of methods for extending the channel count by using the multi-channel information estimating unit 258 include methods (1), (2), and (3) described below.

More particularly, (1) without using the channel extension information provided from the multi-channel information analyzing unit 254, the down-mixed signal outputted from the basic signal analyzing unit 252 is, for example, directly extended from 2-channel into the target channel count, for example, into 4-channel.

(2) Using the channel extension information provided from the multi-channel information analyzing unit 254, for example, the 2-channel down-mixed signal is extended into the target channel count, for example, into 4-channel.

(3) With the Enhanced Matrix Mode standardized in MPS, 2-channel is extended into 4-channel. Here, the Enhanced Matrix Mode is a channel extending unit standardized in MPS, and is a method for reconstructing the down-mixed signal into the multi-channel signal using a predetermined fixed parameter without using the transmission parameter of MPS.

### (Fourth embodiment)

In the present embodiment, description is given of the case where the bit length of the basic signal of AAC and MPS is transmitted separately from the basic signal, as encoding information.

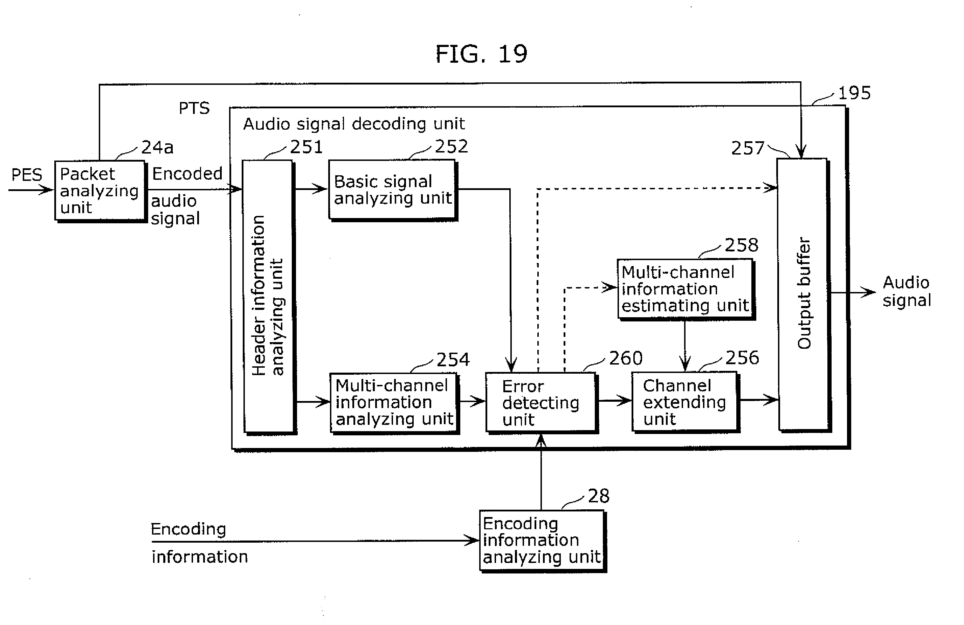

FIG. 19 is a block diagram showing the structure of an audio signal decoding unit in a digital broadcast receiving apparatus according to the fourth embodiment of the present invention. An audio signal decoding unit 195 according to the fourth embodiment includes a header information analyzing unit 251, a basic signal analyzing unit 252, a multi-channel information analyzing unit 254, a channel extending unit 256, an output buffer 257, a multi-channel information estimating unit 258 and an error detecting unit 260. Here, the encoding information analyzing unit 28 is an example of "the analyzing unit which further analyzes based on the encoding information, data length of the basic signal of the encoded audio signal".

The header information analyzing unit 251 analyzes header information of the encoded audio signal, outputs the basic signal of the encoded audio signal to the basic signal analyzing unit 252, and outputs the multi-channel extension information of the encoded audio signal to the multi-channel information analyzing unit 254. The basic signal analyzing unit 252 outputs a down-mixed signal which is a basic signal to the error detecting unit 260. The multi-channel information analyzing unit 254 outputs the multi-channel extension information to the error detecting unit 260.

The error detecting unit 260 analyzes the bit length of the basic signal inputted by the basic signal analyzing unit 252, and determines whether the analyzed bit length matches to the bit length of the basic signal inputted by the encoding information analyzing unit 28. When they are not matched, it can be determined that there is an error in the basic signal. In addition, in the case where an error is detected at the time of channel extension while knowing that there is no error in the basic signal, it can be determined that the error is included in the channel extension information. As described, when there is an error in the channel extension information, outputting with 2-channel without channel extension is possible, or outputting with channel extension using the channel extension information estimated by the multi-channel information estimating unit 258. The channel extending unit 256, the output buffer 257, the multi-channel information estimating unit 258 and the error detecting unit 260 are an example of "the decoding unit which: (i) determines whether or not the basic signal has been correctly decoded by comparing the data length of the basic signal obtained by the analyzing unit and data length of the basic signal obtained though decoding of the encoded audio signal; and (ii) extends, using the channel extension information estimated by the multi-channel estimating unit, the channel count of the basic signal directly into the output channel count of the digital broadcast receiving apparatus, when determined that the basic signal has been correctly decoded".

As described earlier, the AAC bitstream and MPS bitstream have the exact same structure of basic signal in order to maintain compatibility. In other words, the MPS bitstream can be reproduced even only with the basic signal on which the channel extension processing is not performed. In this case, the error detecting unit 260 and the output buffer 257 are an example of "the decoding unit which: (i) further determines whether or not the channel extension processing using the auxiliary information has been correctly performed, when determined that the basic signal has been correctly decoded; and (ii) outputs only the basic signal without adjusting output timings of the audio signal and the video signal, when determined that an error has occurred in the channel extension processing using the auxiliary information". Therefore, even when the receiving condition becomes worse, reproduction of a program can be continued if only the basic signal can be decoded without any errors. However, due to convenience of the compression scheme of AAC, an error in the bitstream is rarely detected at the position where the error occurs. In the header information of AAC, the frame length of the frame is described, and error detection of AAC is performed by comparing frame length for each frame and the frame length described in the header, and determining whether or not there is no difference between them. In AAC, since the portion following the basic signal field is a padding area which has no meaning, there is not much differences in error resilience between detecting the error immediately after the basic signal and detecting the error at the end of the frame.

In contrast, as in the case of MPS, even the error is included in the basic signal, there are many cases that the error is detected not in the basic signal, but in the channel extension information or at the end of the frame. Therefore, even when the error is detected at the time of channel extension, there used to be no way to specify whether the error is included in the basic signal or not. The bit length of only the channel extension information is also described in the channel extension information, but the top position of the channel extension information is not clarified; and thus, the bit length of the channel extension information can be used for confirming if decoding has been correctly performed without any errors, but cannot be used for detecting the error. Thus, in a conventional receiving apparatus, no matter whether the basic signal includes an error or not, when the error is detected in the frame, muting has to be performed.

According to the present invention, by transmitting, as encoding information, information which can clarify the bit length of only the basic signal, it is possible for the digital broadcast receiving apparatus having the structure according to the embodiment 4 to easily determine whether decoding of only the basic signal has been correctly performed or not at the time of occurrence of error. As a result, optimal error correction can be performed depending on the error status, and continuation of reproduction of the program is possible without interrupting reproduction by muting.

Here, the information which can clarify the bit length of only the basic signal is, of course, a bit length of the basic signal itself, but also may be a bit length of the field compatible with AAC, such as bit length of (header + basic signal). In addition, describing bit length of the field which is after the channel extension information also enables calculation of the bit length of the basic signal by subtracting the bit length from the frame length indicated in the header.

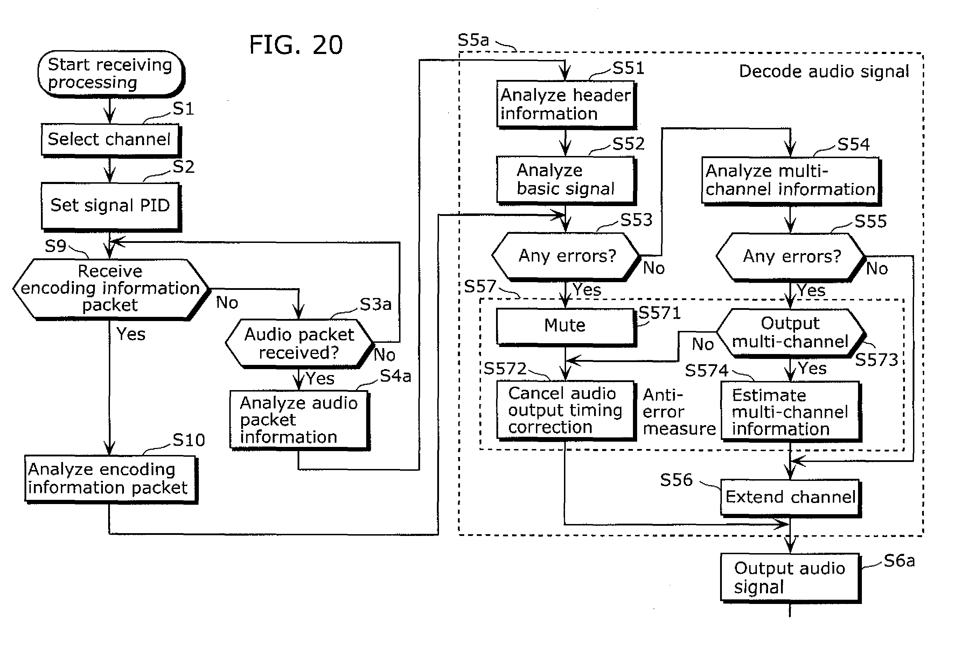

FIG. 20 is a flowchart of the flow of the receiving processing performed in the digital broadcast receiving apparatus according to the present embodiment. In audio signal decoding Step S5a, determination of whether decoding of the basic signal has been performed correctly (553) can be made using the bit length of the basic signal obtained through the encoding information packet analysis (S10). Here, when determined that there is an error in the basic signal, in the error handling step S57, the audio signal is muted (S571), and outputted without performing correction of audio output timing (S572). When determined that there is no error in the basic signal in Step S53, the error detecting unit 260 analyzes the multi-channel information (S54), and determines whether or not there is an error in the channel extension information (S55). When determined that there is an error in the channel extension information, it is determined, in the error handling step S57, according to input from the user and the like, whether multi-channel output is performed or not (S573), and when determined that the multi-channel output is not performed, 2-channel audio output of MPEG-2 AAC is performed (S6a) without performing correction of audio output timing (S572). In Step S573, when determined that multi-channel output is performed, the multi-channel information estimating unit 258 estimates channel extension information (S574), performs channel extension processing using the estimated channel extension information (S56), and then outputs the multi-channel audio signal (S6a). Note that error determination S55 performed at the end of the bitstream can be made by a conventional error determination using frame length. When no error is detected in S53, it is assumed that the error is included in the channel extension information, and it can be determined that audio output of only the basic signal is possible. At this time, instead of outputting only the basic signal as it is, it may be that channel extension information is estimated at the digital broadcast receiving apparatus side, and multi-channel reproduction is performed even at the time of occurrence of error. Estimation of the channel extension information has been described in the third embodiment; and thus the description is not repeated in the present embodiment.

As described, according to the digital broadcast transmitting apparatus of the present invention, encoding scheme, of the audio signal, which is not described in the header information, such as presence of MPS, and output channel count and bit count of the basic signal, is transmitted separately from the encoded stream of the substantial data. Thus, the digital broadcast receiving apparatus can know delay time necessary for decoding the audio signal compared to the case of MPEG-2 AAC, before starting decoding of the encoded audio signal, allowing higher precision synchronization with the video signal.

### (Other variation)

It should be noted that although the present invention has been described based on aforementioned embodiments, the present invention is obviously not limited to such embodiments. The following cases are also included in the present invention.

(1) Each of the aforementioned apparatuses is, specifically, a computer system including a microprocessor, a ROM, a RAM, a hard disk unit, a display unit, a keyboard, a mouse, and the like. A computer program is stored in the RAM or hard disk unit. The respective apparatuses achieve their functions through the microprocessor's operation according to the computer program. Here, the computer program is configured by combining plural instruction codes indicating instructions for the computer in order to achieve predetermined functions.

(2) A part or all of the constituent elements constituting the respective apparatuses may be configured from a single System-LSI (Large-Scale Integration). The System-LSI is a super-multi-function LSI manufactured by integrating constituent units on one chip, and is specifically a computer system configured by including a microprocessor, a ROM, a RAM, and so on. A computer program is stored in the RAM. The System-LSI achieves its function through the microprocessor's operation according to the computer program.

(3) A part or all of the constituent elements constituting the respective apparatuses may be configured as an IC card which is attachable to the respective apparatuses or as a stand-alone module. The IC card or the module is a computer system configured from a microprocessor, a ROM, a RAM, and the so on. The IC card or the module may include the aforementioned super-multi-function LSI. The IC card or the module achieves its function through the microprocessor's operation according to the computer program. The IC card or the module may also be implemented to be tamper-resistant.

(4) The present invention may be a previously described method. Further, the present invention, may be a computer program causing a computer to realize such method, and may also be a digital signal including the computer program.

Furthermore, the present invention may also be realized by storing the computer program or the digital signal in a computer readable recording medium such as a flexible disc, a hard disk, a CD-ROM, an MO, a DVD, a DVD-ROM, a DVD-RAM, a BD (Blu-ray Disc), and a semiconductor memory. Furthermore, the present invention may also include the digital signal recorded in these recording media.

Furthermore, the present invention may also be realized by the transmission of the aforementioned computer program or digital signal via a telecommunication line, a wireless or wired communication line, a network represented by the Internet, a data broadcast and so on.

The present invention may also be a computer system including a microprocessor and a memory, in which the memory stores the aforementioned computer program and the microprocessor operates according to the computer program.

Furthermore, by transferring the program or the digital signal by recording onto the aforementioned recording media, or by transferring the program or digital signal via the aforementioned network and the like, execution using another independent computer system is also made possible.

(5) Combination of the above described embodiments and variations is also possible.

### Industrial Applicability

The present invention is suitable for a digital broadcast transmitting system for transmitting information, such as audio, video and text, in a digital format, and particularly for a digital broadcast receiving apparatus, such as a digital television, set top box, car navigation system, and mobile one-seg viewer.

## Claims

1. A digital broadcast transmitting apparatus which provides multiplex broadcast by encoding and packetizing an audio signal and a video signal that are reproduced in synchronization, said digital broadcast transmitting apparatus comprising:
an audio stream packet generating unit configured to convert the audio signal into an encoded audio signal by encoding the audio signal and to generate an audio stream packet including the encoded audio signal;
a data packet generating unit configured to generate a data packet which is analyzed by a digital broadcast receiving apparatus before decoding the audio stream packet is started, the data packet including encoding information which is not included in header information of the audio stream packet, and which indicates whether or not decoding of the encoded audio signal includes a processing which causes decoding time of the encoded audio signal to exceed a predetermined decoding time;
a video stream packet generating unit configured to convert the video signal into an encoded video signal by encoding the video signal, and to generate a video stream packet including the encoded video signal; and
a transmitting unit configured to multiplex the audio stream packet, the data packet, and the video stream packet so as to generate multiplexed data, and transmit the generated multiplexed data via a broadcast wave.

2. The digital broadcast transmitting apparatus according to Claim 1,
wherein said audio stream packet generating unit includes an audio encoding unit configured to convert the audio signal into the encoded audio signal using one of a first encoding mode and a second encoding mode, the first encoding mode being a mode in which the audio signal is encoded in accordance with MPEG-2 AAC scheme, the second encoding mode being a mode in which the audio signal is encoded in accordance with the MPEG-2 AAC scheme, and is also encoded including auxiliary information for extending a high frequency component or an output channel count of a basic signal obtained in the first encoding mode, and
said data packet generating unit includes an encoding information generating unit configured to generate the encoding information indicating which one of the first encoding mode and the second encoding mode has been used by said audio encoding unit in the conversion of the audio signal into the encoded audio signal.

3. The digital broadcast transmitting apparatus according to Claim 2,
wherein said data packet generating unit is configured to generate an independent data packet including only the encoding information as data.

4. The digital broadcast transmitting apparatus according to Claim 3,
wherein said data packet generating unit is configured to generate the data packet for each audio stream packet generated by said audio stream packet generating unit, and
when data packet includes information that is identical to information included in an immediately preceding data packet, said transmitting unit is configured to transmit multiplexed data in which the data packet is not multiplexed.

5. The digital broadcast transmitting apparatus according to Claim 2,
wherein said data packet generating unit is configured to generate the data packet in a format defined as a section format.

6. The digital broadcast transmitting apparatus according to Claim 2,
wherein said data packet generating unit is configured: (i) to represent, using a descriptor, the encoding information indicating which one of the first encoding mode and the second encoding mode has been used by said audio encoding unit in the conversion of the audio signal into the encoded audio signal; and (ii) to generate a packet in which the descriptor is embedded into a descriptor area, the descriptor area being repeated for each of elementary streams within a program map table (PMT).

7. The digital broadcast transmitting apparatus according to Claim 2,
wherein, said data packet generating unit is configured to further generate a data packet including encoding information indicating an extended channel count of the basic signal, the extended channel count of the basic signal being an output channel count of the basic signal of the case where the output channel count of the basic signal is extended using the auxiliary information.

8. The digital broadcast transmitting apparatus according to Claim 2,
wherein said data packet generating unit is configured to further generate a data packet including encoding information indicating data length of the basic signal.

9. A digital broadcast receiving apparatus which receives multiplex broadcast in which an audio signal and a video signal are encoded, packetized, and transmitted, the audio signal and the video signal being reproduced in synchronization, said digital broadcast receiving apparatus comprising:
a receiving unit configured to receive the multiplex broadcast;
a separating unit configured to separate, from multiplexed data, an audio stream packet, a video stream packet, and a data packet, the multiplexed data being received by said receiving unit via the multiplex broadcast, the audio stream packet including an encoded audio signal which is an audio signal that has been encoded, the video stream packet including an encoded video signal which is a video signal that has been encoded, the data packet being other than the audio stream packet and the video stream packet;
an analyzing unit configured to analyze encoding information from the separated data packet before decoding the audio stream packet is started, the encoding information being information which is not included in header information of the audio stream packet, and which indicates whether or not decoding of the encoded audio signal includes a processing which causes decoding time of the encoded audio signal to exceed a predetermined decoding time; and
a decoding unit configured to adjust output timings of the audio signal and the video signal by an amount of time that the decoding time of the audio signal exceeds the predetermined decoding time, when the encoding information indicates the decoding of the encoded audio signal includes the processing which causes the decoding time of the encoded audio signal to exceed the predetermined decoding time.

10. The digital broadcast receiving apparatus according to Claim 9,
wherein said separating unit is configured to separate, from the received multiplexed data, the audio stream packet including the encoded audio signal which has been encoded using one of a first encoding mode and a second encoding mode, the first encoding mode being a mode in which the audio signal is encoded in accordance with MPEG-2 AAC scheme, the second encoding mode being a mode in which the audio signal is encoded in accordance with the MPEG-2 AAC scheme, and is also encoded including auxiliary information for extending a high frequency component or an output channel count of a basic signal obtained in the first encoding mode;
said analyzing unit is configured to analyze, based on the encoding information, which one of the first encoding mode and the second encoding mode has been used in the encoding of the encoded audio signal included in the separated audio stream packet; and
said decoding unit is configured to adjust output timings of the audio signal and the video signal by an amount of time necessary for extending the high frequency component or the output channel count of the basic signal obtained in the first encoding mode, when the analysis result obtained by said analyzing unit indicates that the second encoding mode has been used in the encoding.

11. The digital broadcast receiving apparatus according to Claim 10,
wherein, when the analysis result obtained by said analyzing unit indicates that the second encoding mode has been used in the encoding of the encoded audio signal included in the separated audio stream packet, said decoding unit is configured to delay outputting the video signal by a predetermined time than the case where the first encoding mode has been used in the encoding.

12. The digital broadcast receiving apparatus according to Claim 10,
wherein, when the analysis result obtained by said analyzing unit indicates that the second encoding mode has been used in the encoding of the encoded audio signal included in the separated audio stream packet, said decoding unit is configured to start decoding of the encoded audio signal earlier by a predetermined time than the case where the first encoding mode has been used in the encoding.

13. The digital broadcast receiving apparatus according to Claim 10,
wherein the predetermined time is a delay time that is an additional time required for decoding processing of the encoded audio signal in the second mode compared to decoding processing of the encoded audio signal in the first mode.

14. The digital broadcast receiving apparatus according to Claim 10,
wherein said analyzing unit is configured to further analyze, based on the encoding information, an extended channel count of the basic signal, the extended channel count of the basic signal being an output channel count of the basic signal of the case where the output channel count of the basic signal is extended using the auxiliary information, and
when the output channel count of said digital broadcast receiving apparatus is different from the channel count indicated by the encoding information, said decoding unit is configured: (i) to extend the channel count of the basic signal directly into the output channel count of said digital broadcast receiving apparatus; and (ii) to adjust output timings of the audio signal and the video signal by an amount of time necessary for extending the output channel count of the basic signal.

15. The digital broadcast receiving apparatus according to Claim 14,
wherein said decoding unit includes:
a multi-channel estimating unit configured to estimate channel extension information, using one of channel-extension related information included in the basic signal, and an initial value or a recommended value used for channel count extension from 2-channel of the basic signal into 5.1-channel of a multi-channel signal, the channel extension information being information for extending the channel count of the basic signal to the output channel count of said digital broadcast receiving apparatus, and
said decoding unit is configured to extend the channel count of the basic signal directly into the output channel count of said digital broadcast receiving apparatus, using the channel extension information estimated by said multi-channel estimating unit.

16. The digital broadcast receiving apparatus according to Claim 15,
wherein said analyzing unit is configured to further analyze, based on the encoding information, data length of the basic signal of the encoded audio signal, and
said decoding unit is configured: (i) to determine whether or not the basic signal has been correctly decoded by comparing the data length of the basic signal obtained by said analyzing unit and data length of the basic signal obtained though decoding of the encoded audio signal; and (ii) to extend, using the channel extension information estimated by said multi-channel estimating unit, the channel count of the basic signal directly into the output channel count of said digital broadcast receiving apparatus, when determined that the basic signal has been correctly decoded.

17. The digital broadcast receiving apparatus according to Claim 16,
wherein said decoding unit is configured: (i) to further determine whether or not the channel extension processing using the auxiliary information has been correctly performed, when determined that the basic signal has been correctly decoded; and (ii) to output only the basic signal without adjusting output timings of the audio signal and the video signal, when determined that an error has occurred in the channel extension processing using the auxiliary information.

18. A digital broadcast transmitting-receiving system comprising a digital broadcast transmitting apparatus and a digital broadcast receiving apparatus, said digital broadcast transmitting apparatus providing multiplex broadcast by encoding, and packetizing an audio signal and a video signal that are reproduced in synchronization, said digital broadcast receiving apparatus receiving the multiplex broadcast,
wherein said digital broadcast transmitting apparatus includes:
an audio stream packet generating unit configured to convert the audio signal into an encoded audio signal by encoding the audio signal, and to generate an audio stream packet including the encoded audio signal;
a data packet generating unit configured to generate a data packet which is analyzed by a digital broadcast receiving apparatus before decoding the audio stream packet is started, the data packet including encoding information which is not included in header information of the audio stream packet, and which indicates whether or not decoding of the encoded audio signal includes a processing which causes decoding time of the encoded audio signal to exceed a predetermined decoding time;
a video stream packet generating unit configured to convert the video signal into an encoded video signal by encoding the video signal, and to generate a video stream packet including the encoded video signal; and
a transmitting unit configured to multiplex the audio stream packet, the data packet, and the video stream packet so as to generate multiplexed data, and transmit the generated multiplexed data via a broadcast wave, and
said digital broadcast receiving apparatus includes:
a receiving unit configured to receive the multiplex broadcast;
a separating unit configured to separate, from the multiplexed data, the audio stream packet, the video stream packet, and the data packet, the multiplexed data being received by said receiving unit via the multiplex broadcast, the audio stream packet including the encoded audio signal which is an audio signal that has been encoded, the video stream packet including the encoded video signal which is a video signal that has been encoded, the data packet being other than the audio stream packet and the video stream packet;
an analyzing unit configured to analyze the encoding information from the separated data packet before decoding of the audio stream packet is started, the encoding information being information which is not included in the header information of the audio stream packet, and which indicates whether or not decoding of the encoded audio signal includes the processing which causes decoding time of the encoded audio signal to exceed the predetermined decoding time; and
a decoding unit configured to adjust output timings of the audio signal and the video signal by an amount of time that the decoding time of the audio signal exceeds the predetermined decoding time, when the encoding information indicates the decoding of the encoded audio signal includes the processing which causes the decoding time of the encoded audio signal to exceed the predetermined decoding time.

19. A digital broadcast transmitting method in which an audio signal and a video signal are encoded and packetized for multiplex broadcast being provided, the audio signal and video signal being reproduced in synchronization, said digital broadcast transmitting method comprising:
converting the audio signal into an encoded audio signal by encoding the audio signal, and generating an audio stream packet including the encoded audio signal, said encoding and generating being performed by an audio stream packet generating unit;
generating a data packet which is analyzed by a digital broadcast receiving apparatus before decoding the audio stream packet is started, the data packet including encoding information which is not included in header information of the audio stream packet, and which indicates whether or not decoding of the encoded audio signal includes a processing which causes decoding time of the encoded audio signal to exceed a predetermined decoding time, said generating being performed by a data packet generating unit;
converting the video signal into an encoded video signal by encoding the video signal, and generating a video stream packet including the encoded video signal, said encoding and generating being performed by a video stream packet generating unit; and
multiplexing the audio stream packet, the data packet, and the video stream packet so as to generate multiplexed data, and transmitting the generated multiplexed data via a broadcast wave, said multiplexing and transmitting being performed by a transmitting unit.

20. A digital broadcast receiving method in which multiplex broadcast is received where an audio signal and a video signal are encoded, packetized and transmitted, the audio signal and the video signal being reproduced in synchronization, said digital broadcast receiving method comprising:
receiving the multiplex broadcast, said receiving being performed by a receiving unit;
separating, from multiplexed data, an audio stream packet, a video stream packet, and a data packet, the multiplexed data being received by said receiving unit via the multiplex broadcast, the audio stream packet including an encoded audio signal which is an audio signal that has been encoded, the video stream packet including an encoded video signal which is a video signal that has been encoded, the data packet being other than the audio stream packet and the video stream packet, said separating being performed by a separating unit;
analyzing encoding information from the separated data packet before decoding the audio stream packet is started, the encoding information being information which is not included in header information of the audio stream packet, and which indicates whether or not decoding of the encoded audio signal includes a processing which causes decoding time of the encoded audio signal to exceed a predetermined decoding time, said analyzing being performed by an analyzing unit; and
adjusting output timings of the audio signal and the video signal by an amount of time that the decoding time of the audio signal exceeds the predetermined decoding time, when the encoding information indicates the decoding of the encoded audio signal includes the processing which causes the decoding time of the encoded audio signal to exceed the predetermined decoding time, said adjusting being performed by a decoding unit.

21. A program for a digital broadcast transmitting apparatus which provides multiplex broadcast by encoding and packetizing an audio signal and a video signal that are reproduced in synchronization, said program causing a computer to execute:
converting the audio signal into an encoded audio signal by encoding the audio signal, and generating an audio stream packet including the encoded audio signal;
generating a data packet which is analyzed by a digital broadcast receiving apparatus before decoding the audio stream packet is started, the data packet including encoding information which is not included in header information of the audio stream packet, and which indicates whether or not decoding of the encoded audio signal includes a processing which causes decoding time of the encoded audio signal to exceed a predetermined decoding time;
converting the video signal into an encoded video signal by encoding the video signal, and generating a video stream packet including the encoded video signal; and
multiplexing the audio stream packet, the data packet, and the video stream packet so as to generate multiplexed data, and transmitting the generated multiplexed data via a broadcast wave.

22. A program for a digital broadcast receiving apparatus which receives multiplex broadcast in which an audio signal and a video signal are encoded, packetized, and transmitted, the audio signal and the video signal being reproduced in synchronization, said program causing a computer to execute:
receiving the multiplex broadcast;
separating, from multiplexed data, an audio stream packet, a video stream packet, and a data packet, the multiplexed data being received by said receiving unit via the multiplex broadcast, the audio stream packet including an encoded audio signal which is an audio signal that has been encoded, the video stream packet including an encoded video signal which is a video signal that has been encoded, the data packet being other than the audio stream packet and the video stream packet;
analyzing encoding information from the separated data packet before decoding the audio stream packet is started, the encoding information being information which is not included in header information of the audio stream packet, and which indicates whether or not decoding of the encoded audio signal includes a processing which causes decoding time of the encoded audio signal to exceed a predetermined decoding time; and
adjusting output timings of the audio signal and the video signal by an amount of time that the decoding time of the audio signal exceeds the predetermined decoding time, when the encoding information indicates the decoding of the encoded audio signal includes the processing which causes the decoding time of the encoded audio signal to exceed the predetermined decoding time.

23. A semiconductor integrated circuit which receives multiplex broadcast in which an audio signal and a video signal are encoded, packetized, and transmitted, the audio signal and the video signal being reproduced in synchronization, said semiconductor integrated circuit comprising:
a receiving unit configured to receive the multiplex broadcast;
a separating unit configured to separate, from multiplexed data, an audio stream packet, a video stream packet, and a data packet, the multiplexed data being received by said receiving unit via the multiplex broadcast, the audio stream packet including an encoded audio signal which is an audio signal that has been encoded, the video stream packet including an encoded video signal which is a video signal that has been encoded, the data packet being other than the audio stream packet and the video stream packet;
an analyzing unit configured to analyze encoding information from the separated data packet before decoding the audio stream packet is started, the encoding information being information which is not included in header information of the audio stream packet, and which indicates whether or not decoding of the encoded audio signal includes a processing which causes decoding time of the encoded audio signal to exceed a predetermined decoding time; and
a decoding unit configured to adjust output timings of the audio signal and the video signal by an amount of time that the decoding time of the audio signal exceeds the predetermined decoding time, when the encoding information indicates the decoding of the encoded audio signal includes the processing which causes the decoding time of the encoded audio signal to exceed the predetermined decoding time.
